(19) Europäisches Patentamt
European Patent Office
Office européen des brevets

(11) Veröffentlichungsnummer: **0 026 414**
**B1**

(12) # EUROPÄISCHE PATENTSCHRIFT

(45) Veröffentlichungstag der Patentschrift: **10.04.85**

(21) Anmeldenummer: **80105652.4**

(22) Anmeldetag: **19.09.80**

(51) Int. Cl.⁴: **C 09 B 62/085,** D 06 P 1/382, C 09 B 29/08, D 06 P 1/39, C 07 D 251/40

(54) **Wasserlösliche Monoazoverbindungen, deren Herstellung und deren Verwendung als Farbstoffe zum Färben und Bedrucken von Textilmaterialien sowie die Amine an sich.**

(30) Priorität: **24.09.79 CH 8604/79**

(43) Veröffentlichungstag der Anmeldung: **08.04.81 Patentblatt 81/14**

(45) Bekanntmachung des Hinweises auf die Patenterteilung: **10.04.85 Patentblatt 85/15**

(84) Benannte Vertragsstaaten: **CH DE FR GB LI**

(56) Entgegenhaltungen:
**FR - A - 2 009 893**
**FR - A - 2 378 069**

(73) Patentinhaber: **CIBA-GEIGY AG, Postfach, CH-4002 Basel (CH)**

(72) Erfinder: **Schwander, Hansrudolf, Dr., Unterm Schellenberg 189, CH-4125 Riehen (CH)**

(74) Vertreter: **Berg, Wilhelm, Dr. et al, Patentanwälte Dr. Berg Dipl.-Ing. Stapf Dipl.-Ing. Schwabe Dr. Dr. Sandmair Postfach 86 02 45 Stuntzstrasse 16, D-8000 München 86 (DE)**

EP 0 026 414 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Monoazoverbindungen, Verfahren zu deren Herstellung sowie deren Verwendung als Farbstoffe zum Färben und Bedrucken von Textilmaterialien, vor allem Wolle und Polyamid.

Die neuen Monoazoverbindungen entsprechen der Formel I

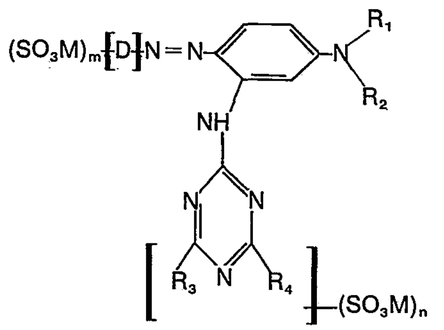

(I)

worin bedeuten:

D den Rest einer aromatischen oder heterocyclischen Diazokomponente,

$R_1$ und $R_2$ unabhängig voneinander einen Alkylrest mit 1 bis 4 Kohlenstoffatomen,

$R_3$ und $R_4$ unabhängig voneinander einen der folgenden Reste: Alkoxy mit 1 bis 10 Kohlenstoffatomen, gegebenenfalls substituiertes Monoalkylamino wobei der Alkylrest 1 bis 10 Kohlenstoffatome aufweist, Monoarylamino, Halogen, N-Aryl-N-alkyl-amino, Dialkylamino ($C_1$–$C_4$)-Alkylmercapto, Cyclohexyloxy, N-Alkyl-N-cyclohexyl-amino und Cyclohexylamino,

M Wasserstoff oder ein Äquivalent eines Kations,

m die Zahlen 0 oder 1, und

n die Zahlen 0, 1 oder 2 mit der Bedingung, dass die Summe von $m + n$ den Zahlenbereich von 1 bis 2 bedeutet.

D in der Bedeutung einer aromatischen oder heterocyclischen Diazokomponente stellt beispielsweise einen Rest der Thiazol-, Thiophen-, Imidazol-, Pyridin-, Indazol-, Pyrazol-, Triazol-, Benztriazol-, Thiadiazol-, Isothiazol- oder Benzisothiazolreihe oder vor allem einen Rest der Benzthiazol oder insbesondere der Benzolreihe dar, welche Rest ausser durch die $(SO_3M)_m$-Gruppe ein- oder mehrmals, gleich oder verschieden substituiert sein können durch beispielsweise: Halogen wie Fluor, Chlor oder Brom; durch die $CF_3$-Gruppe; die $SO_2$-Alkylgruppe wie die Methylsulfonyl-, n- und iso-Propylsulfonyl und n-, sec- und tert.-Butyl-sulfonylgruppe; die $SO_2$-Arylgruppe wie die Phenylsulfonylgruppe oder Naphthylsulfonylgruppe, welche Gruppen im Phenyl- bzw. Naphthylrest noch weitersubstituiert sein können, beispielsweise durch Alkyl, vor allem Methyl; die $SO_2NH_2$-Gruppe; die $SO_2N$-alkyl-N-cyclohexylgruppe wobei der Alkylrest 1 bis 4 Kohlenstoffatome aufweist, wie z.B. die $SO_2N$-Methyl-N-cyclohexylgruppe oder die $SO_2 \cdot$ N-Propyl-N-cyclohexylgruppe, die $SO_2N(alkyl)_2$-Gruppe, worin die Alkylreste 1 bis 4 Kohlenstoffatome aufweisen, unverzweigt oder verzweigt und gegebenenfalls substituiert sein können, wie z.B. die Diäthylaminosulfonylgruppe; ferner kann es sich um die $SO_2NH \cdot R$-Gruppe handeln, worin R einen Alkylrest mit 1 bis 8 Kohlenstoffatomen bedeutet der gegebenenfalls substituiert ist, beispielsweise durch Phenyl, wobei es sich z.B. handelt um die Monoäthylaminosulfonylgruppe, n- und iso-Monobutylaminosulfonylgruppe, Mono-Octylaminosulfonylgruppe und Benzylaminosulfonylgruppe; des weiteren kann der Rest R noch eine Arylgruppe wie die Phenyl- oder Naphthylgruppe, oder die Cyclohexylgruppe oder die Gruppe Alkyl ($C_1$–$C_4$)–O–$SO_3M$, bedeuten.

$R_1$ und $R_2$ in der Bedeutung eines Alkylrestes mit 1 bis 4 Kohlenstoffatomen stellen z.B. einen verzweigten oder vorzugsweise unverzweigten Alkylrest dar wie den Methyl-, Äthyl-, n- und isopropyl- oder n-, sec- oder tert.-Butylrest. In bevorzugten Monoazoverbindungen stellen $R_1$ und $R_2$ die gleichen Alkylreste, insbesondere je den Äthylrest dar.

Bedeuten $R_3$ und $R_4$ eine Alkoxygruppe mit 1 bis 10 Kohlenstoffatomen so handelt es sich um eine unverzweigte oder verzweigte Alkoxygruppe, wie z.B. um die Methoxy-, Äthoxy-, Propoxy-, Butoxy- und Octyloxygruppe, wobei die Alkoxygruppen noch durch eine weitere Alkoxygruppe substituiert sein können; bedeuten $R_3$ und $R_4$ eine Monoalkylaminogruppe so kann der Alkylrest 1 bis 10 Kohlenstoffatome aufweisen und gegebenenfalls z.B. durch Phenyl weitersubstituiert sein; es handelt sich beispielsweise um die Methylamino-, Äthylamino-, Propylamino-, Butylamino-, Octylamino- und Decylaminogruppe oder um die Benzylamino- oder Phenäthylaminogruppe; $R_3$ und $R_4$ in der Bedeutung einer Monoarylaminogruppe stellen beispielsweise die Phenylamino- oder Naphthylaminogruppe dar, welche im Phenyl bzw. Naphthylrest ausser durch die $(SO_3M)_n$-Gruppe noch durch beispielsweise Halogen oder eine Alkylgruppe ($C_1$–$C_4$), wie die Methyl- oder Äthylgruppe oder durch eine Alkoxygruppe ($C_1$–$C_4$), wie die Methoxygruppe substituiert sein können; bedeuten $R_3$ oder $R_4$ Halogen, so handelt es sich um Fluor und Brom oder vorzugsweise um Chlor und bedeuten $R_3$ und $R_4$ die N-Alkyl-N-Aryl-Gruppe, so handelt es sich z.B. um die N-Methyl-N-Phenyl-Gruppe; bedeuten $R_3$ und $R_4$ eine N · N-Dialkylaminogruppe so können die beiden Alkylreste gleich oder verschieden sein; beispielsweise handelt es sich um die Dimethylamino-, Diäthylamino-, Dibutylamino- oder um die N-Methyl-N-Propyl-aminogruppe; bedeuten $R_3$ und $R_4$ die Alkylmercaptogruppe, so handelt es sich z.B. um die Methylthio-, Äthylthio- und Propylthiogruppe; bedeuten $R_3$ und $R_4$ eine N-Alkyl-N-cyclohexyl-aminogruppe so handelt es sich z.B. um die N-Methyl-N-cyclohexylamino-, N-Propyl-N-cyclohexylamino- und N-Butyl-N-cyclohexyl-aminogruppe.

M steht für Wasserstoff oder ein beliebiges bei anionischen Verbindungen, vor allem Farbstoffen übliches Kation, z.B. für Alkalimetall, Ammonium, Mono-, Di- und Tri- ($C_2$–$C_3$-alkanol-ammonium oder Mono-, Di-, Tri- oder Tetra-($C_1$–$C_4$-alkyl)am-

monium, vorzugsweise jedoch für ein Alkalimetall (Lithium, Natrium, Kalium).

Bevorzugte Monoazoverbindungen entsprechen der Formel Ia

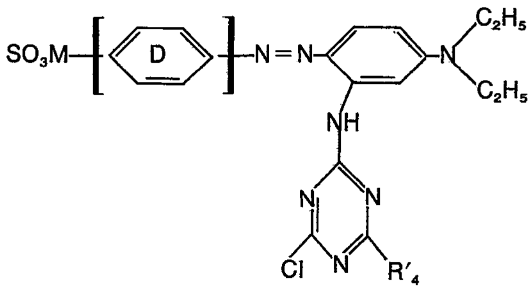

(Ia)

worin der Phenylring D wie bereits erläutert weitersubstituiert sein kann und die Gruppe $R'_4$ die NH · Alkyl-Gruppe, oder die N · N-Dialkylamino- oder die Methylmercaptogruppe und vor allem die O-Alkyl-Gruppe insbesondere die iso-Propoxy-Gruppe darstellt: oder sie entsprechen der Formel Ib

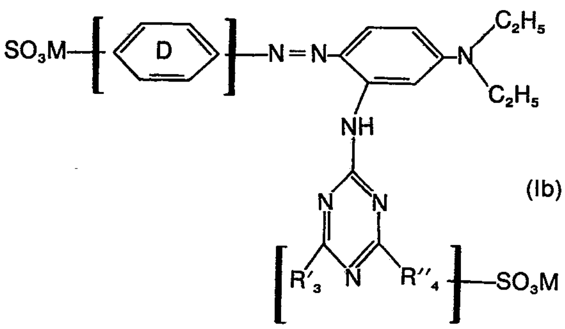

(Ib)

worin der Phenylring D wie bereits erläutert, weitersubstituiert sein kann und die Gruppe $R'_3$ Arylamino-, N-Alkyl-N-Aryl-amino-, N · N-Dialkylamino-, N-Alkyl-N-cyclohexyl-amino-, Cyclohexylamino- oder insbesondere die Monoalkylaminogruppe und $R''_4$ Phenylamino oder Naphthylamino bedeutet.

Von Bedeutung sind schliesslich noch die Monoazoverbindungen der Formel 1c

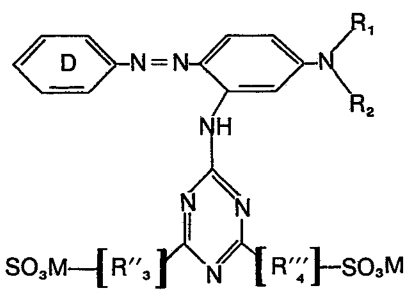

(1c)

worin der Phenylring D wie erläutert weitersubstituiert sein kann und die Gruppen $R''_3$ und $R'''_4$ je die NH-Arylgruppe darstellen.

Die erfindungsgemässen Monoazoverbindungen der Formel I können nach bekannter Art und Weise hergestellt werden, beispielsweise derart, dass man ein Amin der Formel II

$$(SO_3M)_m\text{–D–}NH_2 \qquad (II)$$

diazotiert und mit einer Kupplungskomponente der Formel III

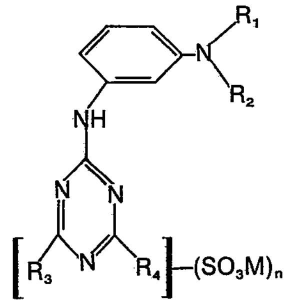

(III)

worin die Symbole D, M, $R_1$, $R_2$, $R_3$, $R_4$, m und n die angegebene Bedeutung haben, kuppelt. Bevorzugt werden dabei Amine der Formel II verwendet, worin m die Zahl 1 bedeutet und Kupplungskomponenten der Formel III, worin n die Zahl 0 oder 1 bedeutet.

Die Amine der Formel II sind bekannt und werden nach bekannten Methoden hergestellt. Von der grossen Vielzahl der möglichen Amine sind beispielsweise genannt:

2,5-Dichloranilin-4-sulfonsäure
2,5-Dichloranilin-4-(N-äthyl(-ω-sulfonsäure)-sulfonsäureamid,
2,5-Dichloranilin-4-(Phenyl-4'-sulfonsäure)-sulfonsäureamid,
2,5-Dichloranilin-4-(Phenyl-3'-sulfonsäure)-sulfonsäureamid,
2,5-Dichloranilin-4-(Phenyl-2'-sulfonsäure)-sulfonsäureamid,
2-Chloranilin-4-(Phenyl-4'-sulfonsäure)-sulfonsäureamid,
1-Aminobenzol-4-sulfonsäure,
1-Aminobenzol-3-sulfonsäure
1-Amino-2-Chlor-benzol-5-sulfonsäure,
1-Amino-2-Chlor-4-Methylsulfonyl-benzol,
1-Amino-benzol-2-(4'-Methyl-phenyl-sulfon)-5-sulfonsäure,
2-Amino-benzthiazol-6-sulfonsäure,
1-Amino-2-Brom-4-methylsulfonyl-benzol,
1-Amino-2,4,5-trichlorbenzol,
1-Amino-2-chlorbenzol-4-diäthylaminosulfonyl,
1-Amino-2,5-dichlorbenzol,
1-Amino-2-chlor-5-methylsulfonyl-benzol,
1-Amino-2-chlor-5-äthylsulfonyl-benzol und
1-Amino-2-chlor-5-trifluormethyl-benzol.

Die Kupplungskomponenten der Formel III, worin n = 1 oder 2 ist, sind neu und stellen einen weiteren Gegenstand der Erfindung dar. Man erhält diese Verbindungen beispielsweise indem man ein Diamin der Formel IV

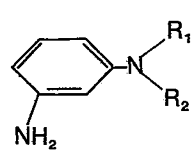

(IV)

mit einem Dichlortriazin der Formel

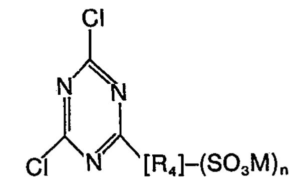

in Wasser bei etwa 5–10 °C kondensiert oder indem man das Diamin der Formel IV mit Cyanurchlorid zu einer Verbindung der Formel V

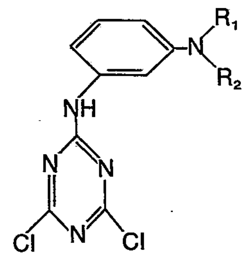

(V)

kondensiert und die beiden Cl-Atome gleichzeitig oder stufenweise mit die Gruppen $R_3$ und $R_4$ einführenden Hydroxyalkylen ($C_1$–$C_{10}$), Alkyl-($C_1$–$C_{10}$)-aminen, Arylaminen, N-Aryl-N-alkylaminen, N,N-Dialkylaminen, Thioalkylen, Hydroxycycloalkylen, N-Alkyl-N-cyclohexylaminen oder Cyclohexylamin, welche Gruppen eine oder zwei $SO_3M$-Gruppen enthalten, kondensiert.

Aus der Vielzahl der Verbindungen der Formel III, welche zur Herstellung der Monoazoverbindungen der Formel I verwendet werden können, sind beispielsweise genannt:

1-Diäthylamino-3-(2′-Isopropoxy-6′-chlor)-triazinylaminobenzol,
1-Diäthylamino-3-(2′-Methoxy-6′-chlor)-triazinylaminobenzol,
1-Diäthylamino-3-(2′-Äthoxy-6′-chlor)-triazinylaminobenzol,
1-Diäthylamino-3-(2′n-Propoxy-6′-chlor)-triazinylaminobenzol,
1-Diäthylamino-3-(2′-n-Butoxy-6′-chlor)-triazinylaminobenzol,
1-Diäthylamino-3-(2′-iso-Butoxy-6′-chlor)-triazinylaminobenzol,
1-Diäthylamino-3-(2′-Cyclohexyloxy-6′-chlor)-triazinylaminobenzol,
1-Diäthylamino-3-(2′-iso-Octyloxy-6′-chlor)-triazinylaminobenzol,
1-Diäthylamino-3-(2′-iso-Propylamino-6′-chlor)-triazinylaminobenzol,
1-Diäthylamino-3-(2′-n-Propylamino-6-chlor)-triazinylaminobenzol,
1-Diäthylamino-3-(2′-n-Butylamino-6′-chlor)-triazinylaminobenzol,
1-Diäthylamino-3-(2′-iso-Butylamino-6′-chlor)-triazinylaminobenzol,
1-Diäthylamino-3-(2′-Cyclohexylamino-6′-chlor)-triazinylaminobenzol,
1-Diäthylamino-3-(2′-Benzylamino-6′-chlor)-triazinylaminobenzol,
1-Diäthylamino-3-(2′-N-Methyl-N-Propyl-amino-6′-chlor)-triazinylaminobenzol,
1-Diäthylamino-3-(2′-Isopropoxy-6′-n-Butylamino)-triazinylaminobenzol,
1-Diäthylamino-3-(2′-Isopropoxy-6′-iso-Butylamino)-triazinylaminobenzol,
1-Diäthylamino-3-(2′-Isopropoxy-6′-iso-Propylamino)-triazinylaminobenzol,
1-Diäthylamino-3-(2′-Isopropoxy-6′-n-Propylamino)-triazinylaminobenzol,
1-Diäthylamino-3-(2′-Isopropoxy-6′-Diäthylamino)-triazinylaminobenzol,
1-Diäthylamino-3-(2′-Isopropoxy-6′-Cyclohexylamino)-triazinylaminobenzol,
1-Diäthylamino-3-(2′-Isopropylamino-6′-Isopropylamino)-triazinylaminobenzol,
1-Diäthylamino-3-(2′-Isopropylamino-6′-n-Propylamino)-triazinylaminobenzol,
1-Diäthylamino-3-(2′-Isopropylamino-6′-n-Butylamino)-triazinylaminobenzol,
1-Diäthylamino-3-(2′-Isopropylamino-6′-iso-Butylamino)-triazinylaminobenzol,
1-Diäthylamino-3-(2′-Isopropylamino-6′-Methylamino)-triazinylaminobenzol,
1-Diäthylamino-3-(2′-Isopropylamino-6′-Diäthylamino)-triazinylaminobenzol,
1-Diäthylamino-3-(2′-Isopropylamino-6′-Cyclohexylamino)-triazinylaminobenzol,
1-Diäthylamino-3-(2′-Isopropylamino-6′-Benzylamino)-triazinylaminobenzol,
2-Diäthylamino-3-(2′-Äthylamino-β-sulfonsäure-6′-N-Methyl-N-cyclohexylamin)-triazinylaminobenzol,
1-Diäthylamino-3-(2′-Äthylamino-β-sulfonsäure-6′-Methylamin)-triazinylaminobenzol,
1-Diäthylamino-3-(2′-Äthylamino-β-sulfonsäure-6′-Äthylamin)-triazinylaminobenzol,
1-Diäthylamino-3-(2′-Äthylamino-β-sulfonsäure-6′-Dimethylamin)-triazinylaminobenzol,
1-Diäthylamino-3-(2′-Äthylamino-β-sulfonsäure-6-Cyclohexylamin)-triazinylaminobenzol,
1-Diäthylamino-3-(2′-Äthylamino-β-sulfonsäure-6-Benzylamin)-triazinylaminobenzol,
1-Diäthylamino-3-(2′-Äthylamino-β-sulfonsäure-6′-chlor)-triazinylaminobenzol,
1-Diäthylamino-3-(2′-Phenylamin-[3′-sulfonsäure]-6′-Phenylamin)-triazinylaminobenzol,
1-Diäthylamino-3-(2′-Phenylamin-[3″-sulfonsäure]-6′-[2″-Methyl]-Phenylamin)-triazinylaminobenzol,
1-Diäthylamino-3-(2′-Phenylamin-[3″-sulfonsäure]-6′-[2″-Äthyl]-Phenylamin-triazinylaminobenzol,
1-Diäthylamino-3-(2′-Phenylamin-[3″-sulfonsäure]-6′-[2″ · 4″-Dimethyl]-Phenylamin)-triazinylaminobenzol,
1-Diäthylamino-3-(2′-Phenylamin-[3″-sulfonsäure]-6′-[2″ · 5″-Dimethyl]-Phenylamin)-triazinylaminobenzol, und
1-Diäthylamino-3-(2′-Phenylamino-[3″-sulfonsäure]-6′-Phenylamino-[3″-sulfonsäure])-triazinylaminobenzol.

Bevorzugt werden Verbindungen der Formel III verwendet, worin $R_1$ und $R_2$ je den gleichen Alkylrest vor allem je den $C_2H_5$-Rest darstellen, und worin $R_3$ Halogen, Monoalkylamino mit 1 bis 10 Kohlenstoffatomen im Alkylrest, gegebenenfalls substituiert durch Phenyl; N,N-Dialkylamino, Cyclohexylamino, N-Alkyl-N-cyclohexylamino-,

Arylamino oder N-Alkyl-N-arylamino und $R_4$ Alkoxy mit 1 bis 8 Kohlenstoffatomen, Cyclohexyloxy, Monoalkylamino, gegebenenfalls substituiert durch Phenyl, Cyclohexylamino, Arylamino oder N,N-Dialkylamino bedeutet, und insbesondere solche Verbindungen, worin $R_3$ Halogen, vor allem Chlor, und $R_4$ Alkoxy mit 1 bis 8 Kohlenstoffatomen, insbesondere Isopropoxy bedeutet.

Sowohl die Diazotierung der Verbindung II, als auch die Kupplungsreaktion der Verbindung II mit der Verbindung III sowie die Kondensationsreaktion der Verbindung IV mit dem Dichlortriazin bzw. Cyanurchlorid sind bekannt und werden nach üblichen Methoden durchgeführt.

Verwendung finden die neuen Monoazoverbindungen der Formel I vor allem als Farbstoffe zum Färben und Bedrucken von Textilmaterialien, welche mit anionischen Farbstoffen färbbar sind, vor allem Polyamidmaterialien und Wolle. Das Färben kann nach beliebigen für das entsprechende Substrat geeigneten, kontinuierlichen oder diskontinuierlichen Methoden (z, B. Auszieh-, Klotz- oder Druckverfahren) erfolgen. Mit den erfindungsgemässen Monoazofarbstoffen werden Ausfärbungen erhalten, die gute Allgemeinechtheiten aufweisen, wie vor allem einen guten Farbstoffaufbau, sehr gute Nassechtheiten, gute Lichtechtheiten, gute Formaldehydbeständigkeit und ein gutes Decken der Streifigkeit.

Die zu färbenden Textilmaterialien können dabei in den verschiedensten Verarbeitungsformen wie Gewirke, Gewebe, Garne und Fasern sowie fertigen Artikeln, wie Hemden vorliegen.

Aus der FR-A-2 009 893 ist ein ähnlicher Farbstoff bekannt, der jedoch nicht alle guten Eigenschaften der erfindungsgemässen Monoazoverbindungen aufweist.

In den nachfolgenden Beispielen bedeuten die Teile, sofern nichts anderes angegeben wird, Gewichtsteile, die Prozente Gewichtsprozente und die Temperaturen sind in Celsiusgraden angegeben. Sie sollen die Erfindung erläutern ohne sie jedoch in irgendeiner Form zu beschränken.

Beispiel 1

Zu einem Gemisch, bestehend aus 16,4 g der Verbindung der Formel

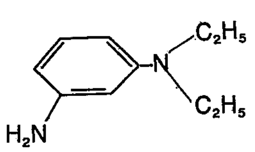

und 50 ml Wasser lässt man bei 8–10° und einem pH-Wert von 7 bei gutem Rühren allmählich 23,9 g Dichlor-Isopropoxy-(s)-triazin zutropfen, wobei man den pH-Wert durch Zugabe von 20%iger Natriumcarbonat-Lösung einstellt. Nach vollständiger Umsetzung scheidet sich das gebildete Produkt der Formel

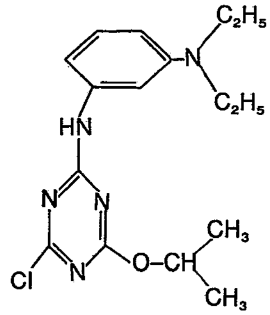

als harzige Masse ab. Man dekantiert davon ab und wäscht mit Wasser, worauf man das Produkt in Äthylenglykol-monoäthyläther löst.

Verwendet man bei ansonst gleichem Vorgehen die Dichlortriazin-Verbindungen der Kolonne I der folgenden Tabelle I, so erhält man die Verbindungen der Kolonne II, welche ähnliche chemische Eigenschaften aufweisen.

Tabelle I

| | I | II |
|---|---|---|
| Nr. | Dichlor-triazinverbindung 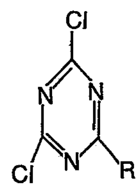 | 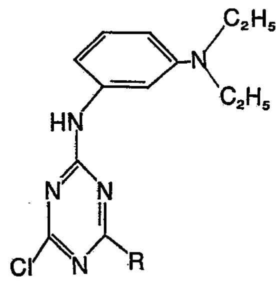 |
| | | R |
| 2 | | $-OCH_3$ |
| 3 | | $-OC_2H_5$ |
| 4 | | $-O-C_3H_7$ (n) |
| 5 | | $-O-C_4H_9$ (n) |
| 6 | | 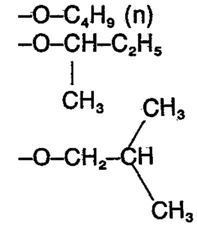 |
| 7 | | |
| 8 | | 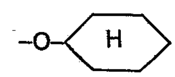 |
| 9 | | 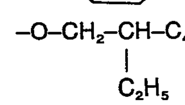 |

Beispiel 10

Man löst 2/100 Mol 2,5-Dichloranilin-4-sulfosäure neutral in 60 ml Wasser, versetzt mit 5 ml 4n-Natriumnitrit-Lösung und giesst das Gemisch auf 60 g Eis und 6 ml 36%ige Salzsäure. Nach zweistündigem Rühren bei 0–2° zerstört man den Nitritüberschuss mit Sulfaminsäure und stellt den pH-Wert durch Zugabe von festem Natriumcarbonat auf 3. Man lässt nun bei 0–2° eine Äthylenglykol-monoäthyläther-Lösung enthaltend 2/100 Mol der Verbindung der Formel

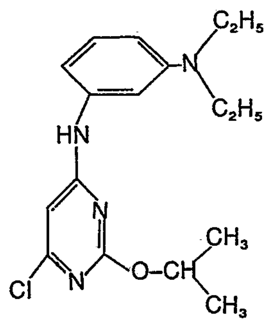

zulaufen, wobei man den pH-Wert durch Zugabe von 4n-Natriumhydroxyd-Lösung bei 3,5–4 hält. Nach beendeter Kupplung stellt man auf pH 7 und isoliert den gebildeten Farbstoff wie üblich durch Aussalzen mit Kochsalz.

Das Natriumsalz des erhaltenen Farbstoffs der Formel

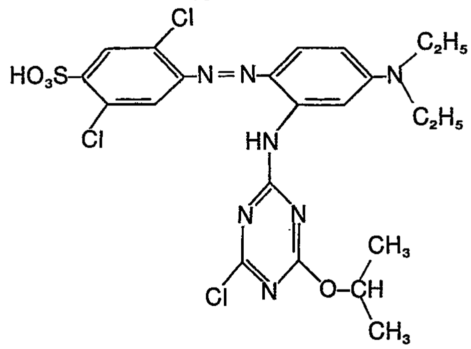

bildet nach dem Trocknen ein rotes Pulver, welches sich in Wasser mit roter Farbe löst.

Die mit Hilfe dieses Farbstoffs auf Polyamidgewebe aus schwach saurem Bad erzeugten roten Färbungen weisen gute Echtheitseigenschaften auf, insbesondere sind sie gut licht- und nassecht.

Verwendet man bei analogem Vorgehen anstelle der oben angeführten Diazokomponente die in der folgenden Tabelle II unter D aufgeführten Diazokomponenten und anstelle der Kupplungskomponente die in dieser Tabelle aufgeführten Kupplungskomponenten, so erhält man Farbstoffe mit ähnlichen Eigenschaften, welche Polyamid in der angegebenen Nuance färben.

Tabelle II

Nr. Kupplungskomponente

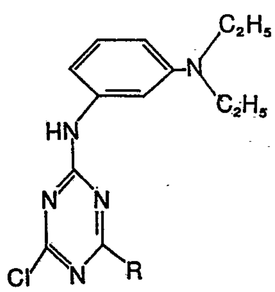

| Nr. | D | R | Nuance auf Polyamid |
|---|---|---|---|
| 11 | 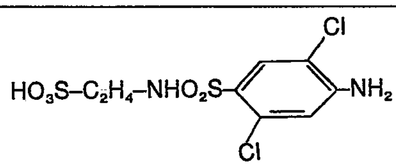 | 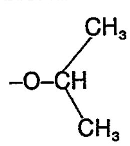 | rot |
| 12 | do. | $-O-C_2H_5$ | do. |
| 13 | do. | $-O-C_3H_7$ (n) | do. |
| 14 | do. | $-O-C_4H_9$ (n) | do. |
| 15 | do. | 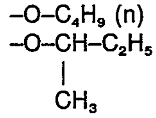 | do. |
| 16 | do. | 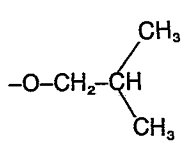 | do. |
| 17 | do. | 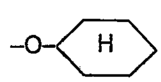 | do. |

Tabelle II (Fortsetzung)

Nr. Kupplungskomponente

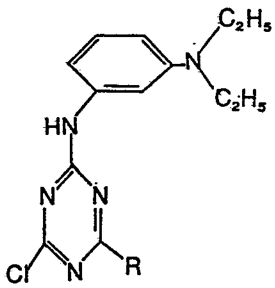

| Nr. | D | R | Nuance auf Polyamid |
|---|---|---|---|
| 18 | do. | 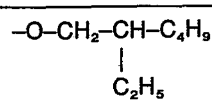 | rot |
| 19 | 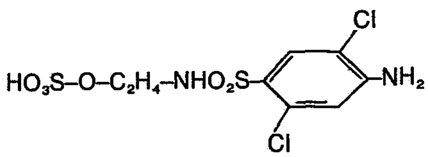 | 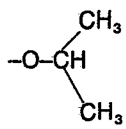 | do. |
| 20 | do. | $-O-C_2H_5$ | do. |
| 21 | do. | $-O-C_3H_7$ (n) | do. |
| 22 | do. | $-O-C_4H_9$ (n) | do. |
| 23 | do. | 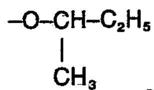 | do. |
| 24 | do. | 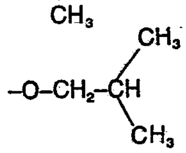 | do. |
| 25 | do. | 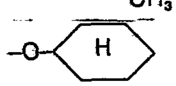 | do. |
| 26 | do. | 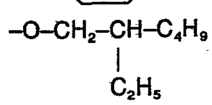 | do. |
| 27 | 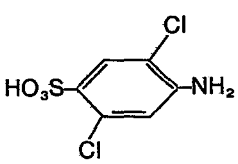 | $-O-C_2H_5$ | do. |
| 28 | do. | $-O-C_3H_7$ (n) | do. |
| 29 | do. | $-O-C_4H_9$ (n) | do. |
| 30 | do. | 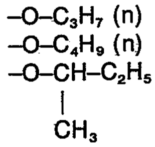 | do. |
| 31 | do. | 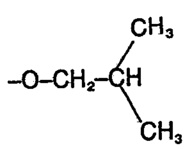 | do. |
| 32 | do. | 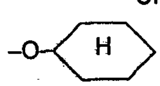 | do. |
| 32a | do. | $SCH_3$ | do. |

Tabelle II (Fortsetzung)

Nr. Kupplungskomponente

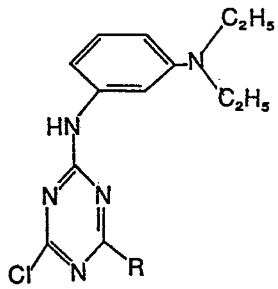

| Nr. | D | R | Nuance auf Polyamid |
|---|---|---|---|
| 33 | 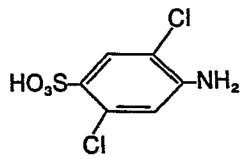 | 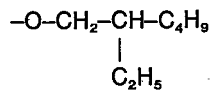 | rot |
| 34 | 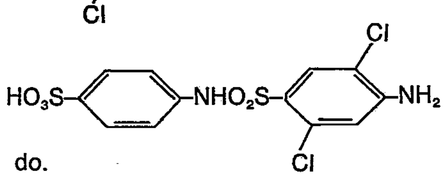 | $-O-C_2H_5$ | do. |
| | do. | | |
| 34a | do. | $-O-CH_3$ | do. |
| 35 | do. | 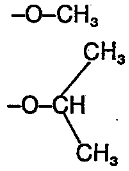 | do. |
| 36 | do. | $-O-C_3H_7$ (n) | do. |
| 37 | do. | $-O-C_4H_9$ (n) | do. |
| 38 | do. | 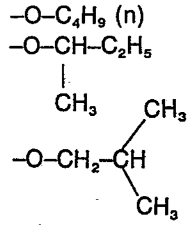 | do. |
| 39 | do. | | do. |
| 40 | do. | 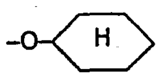 | do. |
| 41 | do. | 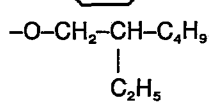 | do. |
| 42 | 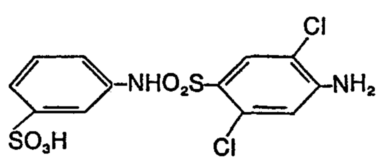 | $-OCH_3$ | do. |
| 43 | do. | $-O-C_2H_5$ | do. |
| 44 | do. | 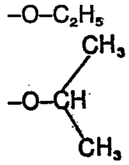 | do. |
| 45 | do. | $-O-C_3H_7$ (n) | do. |

Tabelle II (Fortsetzung)

Nr. Kupplungskomponente

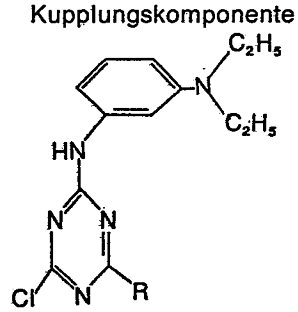

| Nr. | D | R | Nuance auf Polyamid |
|---|---|---|---|
| 46 | 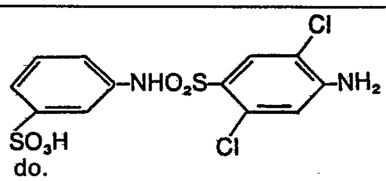 | $-O-C_4H_9$ (n) | rot |
| 47 | do. | 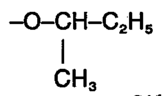 | do. |
| 48 | do. | 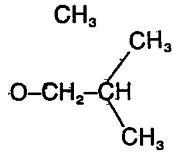 | do. |
| 49 | do. | 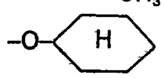 | do. |
| 50 | do. | 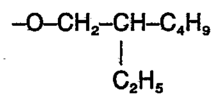 | do. |
| 51 | 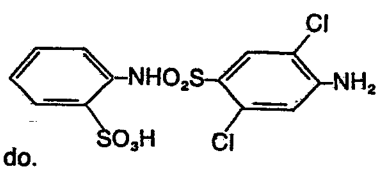 | $-OCH_3$ | do. |
| 52 | do. | $-OC_2H_5$ | do. |
| 53 | do. | 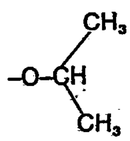 | do. |
| 54 | do. | $-O-C_3H_7$ (n) | do. |
| 55 | do. | $-O-C_4H_9$ (n) | do. |
| 56 | do. | 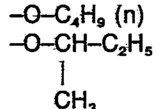 | do. |
| 57 | do. | 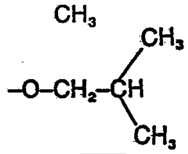 | do. |
| 58 | do. | 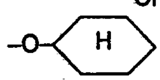 | do. |
| 59 | do. | 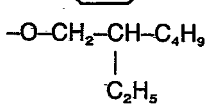 | do. |
| 60 | 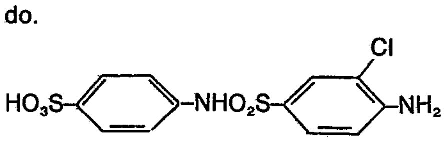 | $-OCH_3$ | do. |
| 61 | do. | $-OC_2H_5$ | do. |
| 62 | do. | 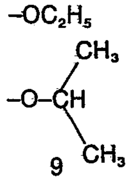 | do. |

Tabelle II (Fortsetzung)

Nr. Kupplungskomponente

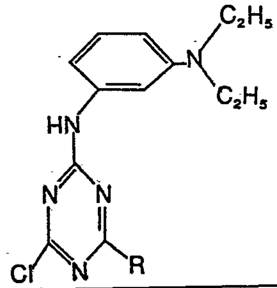

| Nr. | D | R | Nuance auf Polyamid |
|---|---|---|---|
| 63 | 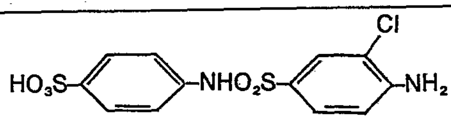 | $-O-C_3H_7$ (n) | rot |
| 64 | do. | $-O-C_4H_9$ (n) | do. |
| 65 | do. | 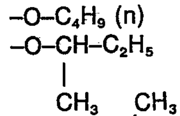 | do. |
| 66 | do. | 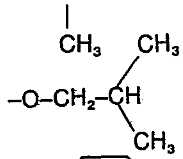 | do. |
| 67 | do. | 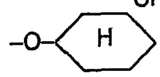 | do. |
| 68 | do. | 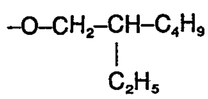 | do. |
| 69 | 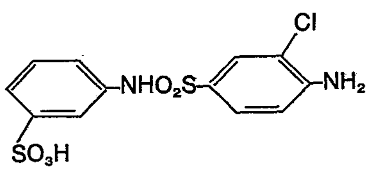 | $-OCH_3$ | do. |
| 70 | do. | $-OC_2H_5$ | do. |
| 71 | do. | 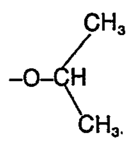 | do. |
| 72 | do. | $-O-C_3H_7$ (n) | do. |
| 73 | do. | $-O-C_4H_9$ (n) | do. |
| 74 | do. | 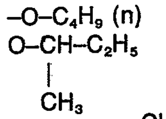 | do. |
| 75 | do. | 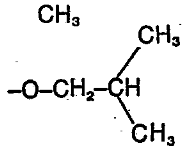 | do. |
| 76 | do. | 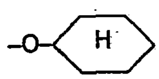 | do. |
| 77 | do. | 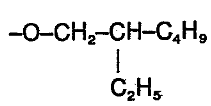 | do. |
| 78 | 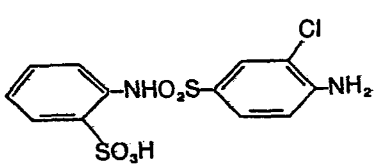 | $-OCH_3$ | do. |

Tabelle II (Fortsetzung)

Nr. Kupplungskomponente

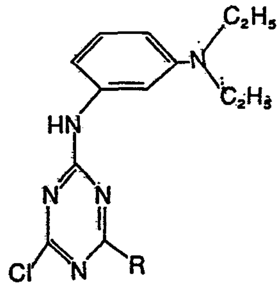

| Nr. | D | R | Nuance auf Polyamid |
|---|---|---|---|
| 79 | 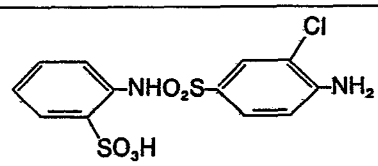 | $-OC_2H_5$ | rot |
| 80 | do. | 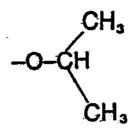 | do. |
| 81 | do. | $-O-C_3H_7$ (n) | do. |
| 82 | do. | $-O-C_4H_9$ (n) | do. |
| 83 | do. | 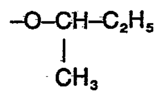 | do. |
| 84 | do. | 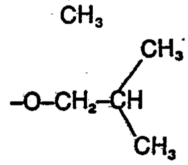 | do. |
| 85 | do. | 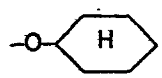 | do. |
| 86 | do. | 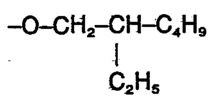 | do. |
| 87 | 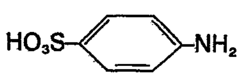 | $-OCH_3$ | Orange |
| 88 | do. | $-O-C_2H_5$ | do. |
| 89 | do. | 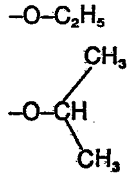 | do. |
| 90 | do. | $-OC_3H_7$ (n) | do. |
| 91 | do. | $-O-C_4H_9$ (n) | do. |
| 92 | do. | 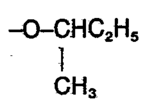 | do. |
| 93 | do. | 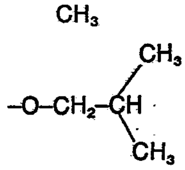 | do. |

Tabelle II (Fortsetzung)

Nr. Kupplungskomponente

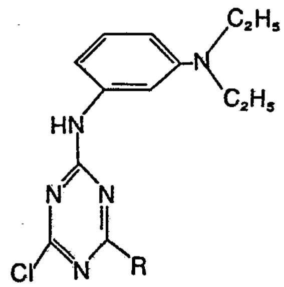

| Nr. | D | R | Nuance auf Polyamid |
|---|---|---|---|
| 94 | 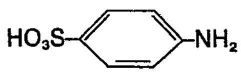 | 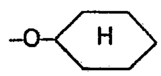 | Orange |
| 95 | do. | 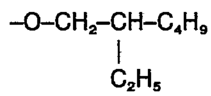 | do. |
| 96 | 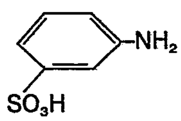 | $-OCH_3$ | rotstichig-gelb |
| 97 | do. | $-OC_2H_5$ | do. |
| 98 | do. | 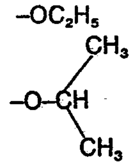 | do. |
| 99 | do. | $-OC_3H_7$ (n) | do. |
| 100 | do. | $-OC_4H_9$ (n) | do. |
| 101 | do. | 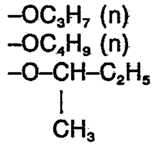 | do. |
| 102 | do. | 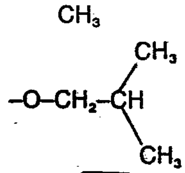 | do. |
| 103 | do. | 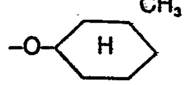 | do. |
| 104 | do. | 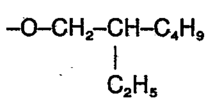 | do. |
| 105 | 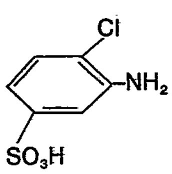 | $-OCH_3$ | do. |
| 106 | do. | $-OC_2H_5$ | do. |
| 107 | do. | 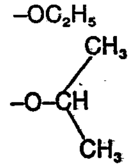 | do. |
| 108 | do. | $-OC_3H_7$ (n) | do. |
| 109 | do. | $-OC_4H_9$ (n) | do. |
| 110 | do. | 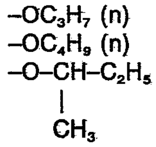 | do. |

Tabelle II (Fortsetzung)

Nr. Kupplungskomponente

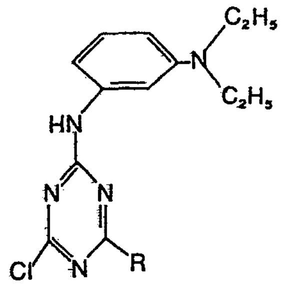

| Nr. | D | R | Nuance auf Polyamid |
|---|---|---|---|
| 111 | 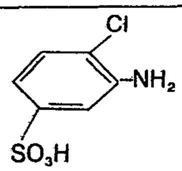 | 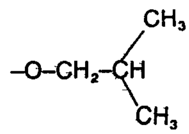 | rotstichig-gelb |
| 112 | do. | 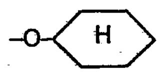 | do. |
| 113 | do. | 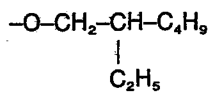 | do. |
| 114 | 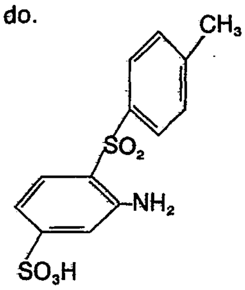 | $-OCH_3$ | rot |
| 115 | do. | $-OC_2H_5$ | do. |
| 116 | do. | 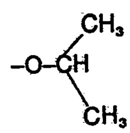 | do. |
| 117 | do. | $-OC_3H_7$ (n) | do. |
| 118 | do. | $-OC_4H_9$ (n) | do. |
| 119 | do. | 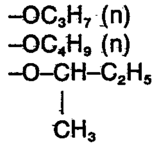 | do. |
| 120 | do. | 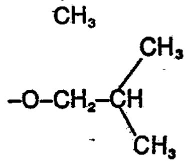 | do. |
| 121 | do. | 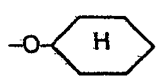 | do. |
| 122 | do. | 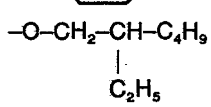 | do. |
| 123 | 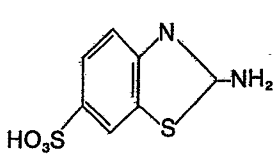 | $-OCH_3$ | do. |
| 124 | do. | $-OC_2H_5$ | do. |

Tabelle II (Fortsetzung)

Nr. Kupplungskomponente

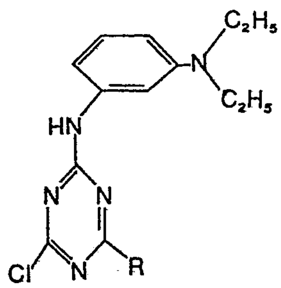

| Nr. | D | R | Nuance auf Polyamid |
| --- | --- | --- | --- |
| 125 | 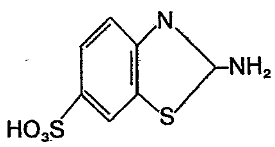 | 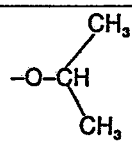 | rot |
| 126 | do. | $-OC_3H_7$ (n) | do. |
| 127 | do. | $-OC_4H_9$ (n) | do. |
| 128 | do. | 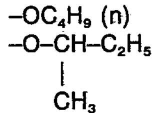 | do. |
| 129 | do. | 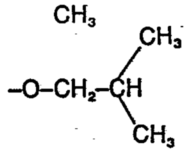 | do. |
| 130 | do. | 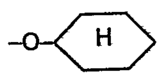 | do. |
| 131 | do. | 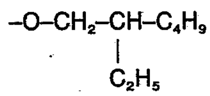 | do. |

Beispiel 132

Zu einer feinen Suspension von Cyanurchlorid, hergestellt durch Aufgiessen einer Lösung von 18,5 g Cyanurchlorid in 100 ml Aceton auf 350 g Eis und 55 ml Wasser, tropft man bei einer Temperatur von 0–2° und einem pH-Wert von ca. 5 16,4 g der Verbindung der Formel

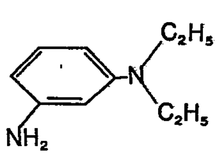

zu. Nach beendeter Umsetzung stellt man den pH-Wert auf 7, erhöht die Temperatur auf 15–20° und setzt bei pH 8 mit 6 g Isopropylamin um. Der pH-Wert wird durch Zugabe von 20%iger Natriumcarbonatlösung eingestellt. Das gebildete Produkt der Formel

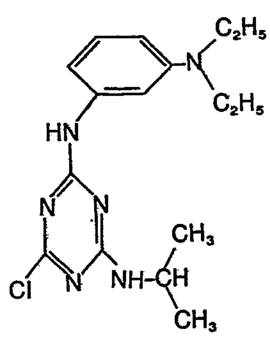

wird bei pH 7 abfiltriert und zur Verwendung als Kupplungskomponente in Äthylenglykol-monoäthyläther gelöst.

Verwendet man bei ansonst gleichem Vorgehen anstelle von Isopropylamin äquivalente Mengen der Amine der Kolonne I der folgenden Tabelle III, so erhält man die in Kolonne II aufgeführten Kupplungskomponenten, welche ähnliche chemische Eigenschaften aufweisen.

Tabelle III

| Nr. | I | II |
|---|---|---|
| | Amine | 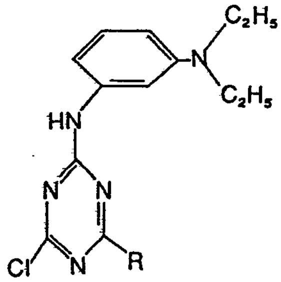 |
| | | R |
| 133 | $H_2N-C_3H_7$ (n) | $-NH-C_3H_7$ (n) |
| 134 | $H_2N-C_4H_9$ (n) | $-NH-C_4H_9$ (n) |
| 135 | $H_2N-CH-C_2H_5$<br>\|<br>$CH_3$ | $-NH-CH-C_2H_5$<br>\|<br>$CH_3$ |
| 136 | 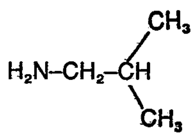 | 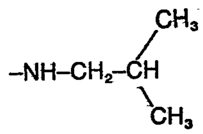 |
| 137 | 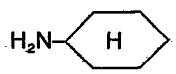 | 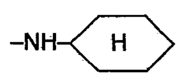 |
| 138 | 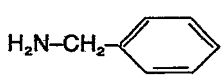 | 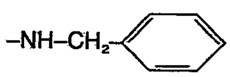 |
| 139 | 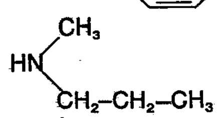 | 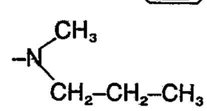 |

Beispiel 140

In eine Diazolösung von 2/100 Mol 2,5-Dichloranilin-4-sulfosäure, deren pH-Wert mit Natriumcarbonat auf 3 gestellt wurde, lässt man bei 0–2° eine Lösung von 2/100 Mol der Verbindung der Formel

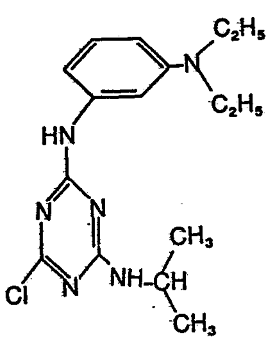

zutropfen, wobei man den pH-Wert bei 3,5–4 hält. Nach vollständiger Kupplung stellt man auf pH 7 und isoliert den gebildeten Farbstoff in üblicher Weise durch Aussalzen mit Kochsalz.

Der Farbstoff der Formel

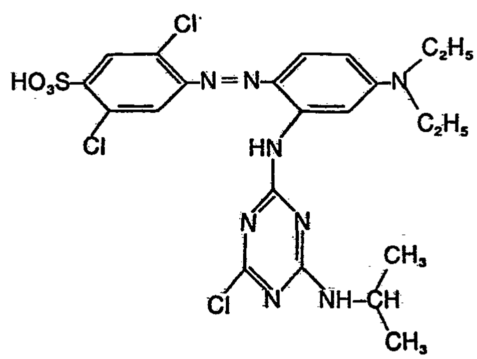

bildet nach dem Trocknen als Natriumsalz ein rotes Pulver, welches sich in Wasser mit roter Farbe löst. Die mit diesem Farbstoff aus schwach saurem Bad auf Polyamid erzeugten roten Färbungen sind gut licht- und nassecht.

Verwendet man bei analogem Vorgehen die Diazokomponenten in Kolonne I der folgenden Tabelle IV und die Kupplungskomponenten der Kolonne I, so erhält man Farbstoffe mit ähnlichen Eigenschaften, welche Polyamid in den unter Kolonne III angegebenen Farbtönen färben.

Tabelle IV

| | I | II | II |
|---|---|---|---|
| Nr. | Diazokomponente | 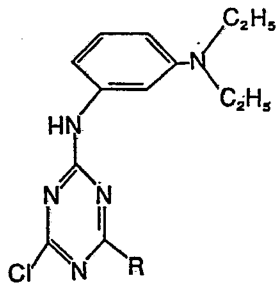<br>R | Nuance auf Polyamid |
| 141 | 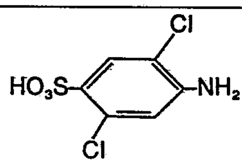 | $-NH-C_3H_7$ (n) | rot |
| 142 | do. | $-NH-C_4H_9$ (n) | do. |
| 143 | do. | 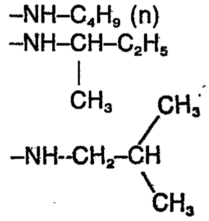 | do. |
| 144 | do. | | do. |
| 145 | do. | 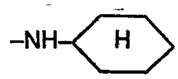 | do. |
| 146 | do. | 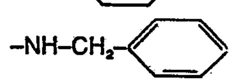 | do. |
| 147 | do. | 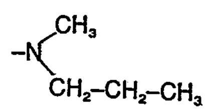 | do. |
| 148 | 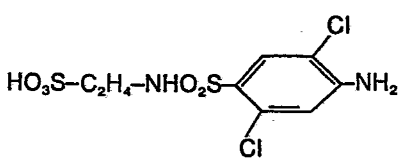 | 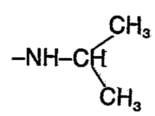 | do. |
| 149 | do. | $-NH-C_3H_7$ (n) | do. |
| 150 | do. | $NH-C_4H_9$ (n) | do. |
| 151 | do. | 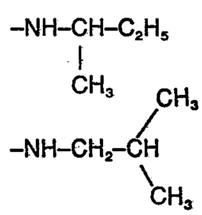 | do. |
| 152 | do. | | do. |
| 153 | do. | 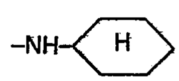 | do. |
| 154 | do. | 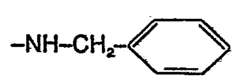 | do. |
| 155 | do. | 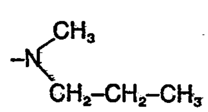 | do. |

Tabelle IV (Fortsetzung)

| Nr. | I<br>Diazokomponente | II<br>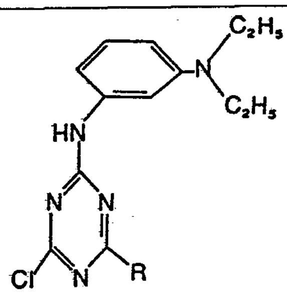<br>R | II<br>Nuance auf Polyamid |
|---|---|---|---|
| 156 | 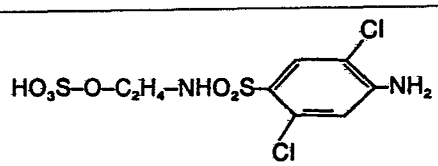 | 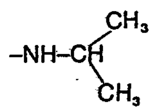 | rot |
| 157 | do. | $-NH-C_3H_7$ (n) | do. |
| 158 | do. | $-NH-C_4H_9$ (n) | do. |
| 159 | do. | 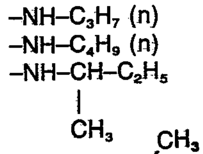 | do. |
| 160 | do. | 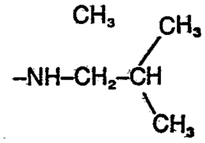 | do. |
| 161 | do. | 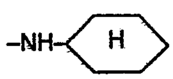 | do. |
| 162 | do. | 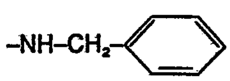 | do. |
| 163 | do. | 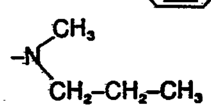 | do. |
| 164 | 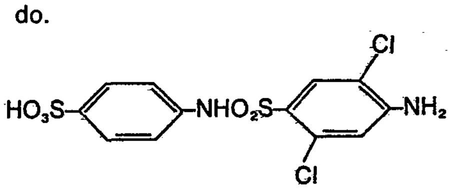 | 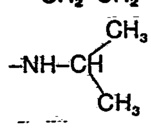 | do. |
| 165 | do. | $-NH-C_3H_7$ (n) | do. |
| 166 | do. | $-NH-C_4H_9$ (n) | do. |
| 167 | do. | 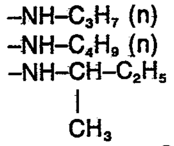 | do. |
| 168 | do. | 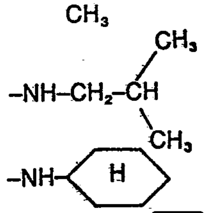 | do. |
| 169 | do. | | do. |
| 170 | do. | 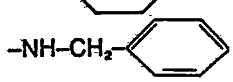 | do. |
| 171 | | 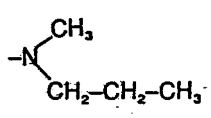 | do. |

Tabelle IV (Fortsetzung)

| | I | II | II |
|---|---|---|---|
| Nr. | Diazokomponente | 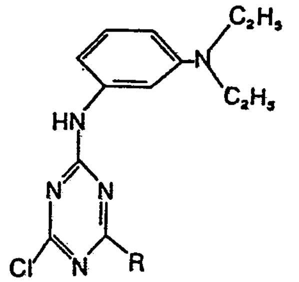<br>R | Nuance auf Polyamid |
| 172 | 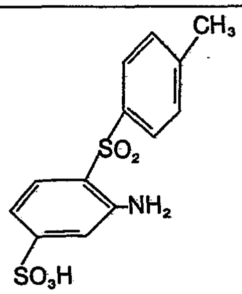 | 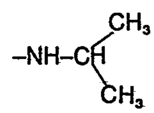 | rot |
| 173 | do. | $-NH-C_3H_7$ (n) | do. |
| 174 | do. | $-NH-C_4H_9$ (n) | do. |
| 175 | do. | 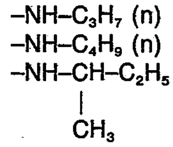 | do. |
| 176 | do. | 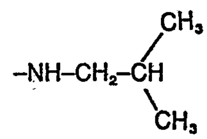 | do. |
| 177 | do. | 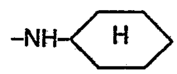 | do. |
| 178 | do. | 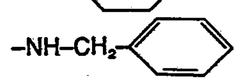 | do. |
| 179 | do. | 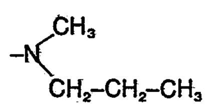 | do. |

Beispiel 180

Zu einem Gemisch, bestehend aus 17 g der Verbindung der Formel .

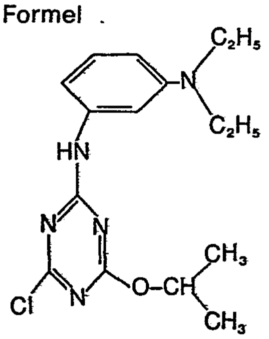

180 ml Dimethylformamid und 70 ml Wasser gibt man bei 40° und pH ca. 8 4,4 g n-Butylamin. Nach beendeter Umsetzung stellt man auf pH 7, destilliert den Wasseranteil im Vakuum ab, unterwirft den Rückstand einer Klärfiltration und erhält eine Lösung der Verbindung der Formel

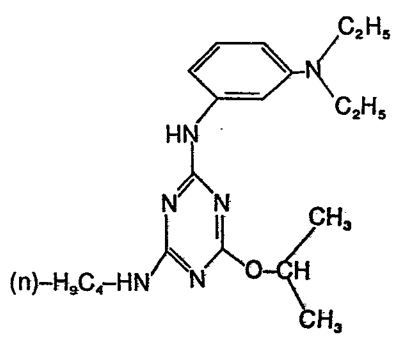

welche bei Kupplungen verwendet werden kann.

Verwendet man bei gleichem Vorgehen anstelle von n-Butylamin die in der folgenden Tabelle V unter Kolonne I aufgeführten Amine, so erhält man die Kupplungskomponenten der Kolonne II, welche ähnliche chemische Eigenschaften aufweisen.

Tabelle V

| | I | II |
|---|---|---|
| Nr. | Amine | Kupplungskomponenten 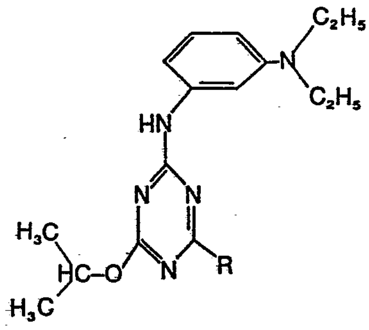 |
| | | R |
| 181 | 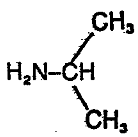 | 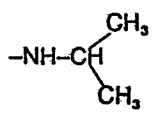 |
| 182 | 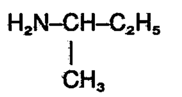 | 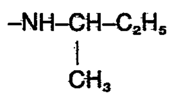 |
| 183 | 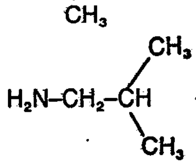 | 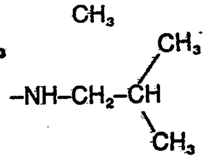 |
| 184 | $H_2N-C_3H_7$ (n) | $-NH-C_3H_7$ (n) |
| 185 | 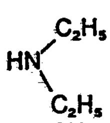 | 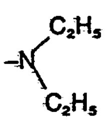 |
| 186 | 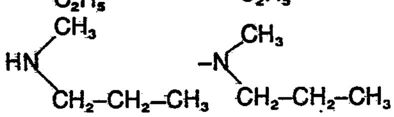 | |
| 187 | 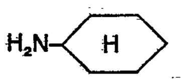 | 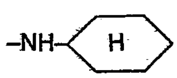 |

Beispiel 188

In eine Diazoniumsalzlösung entsprechend 2/100 Mol 2,5-Dichloranilin-4-sulfosäure, welche mit Natriumcarbonat auf pH 3 gestellt wurde, lässt man bei 0–2° eine Lösung von 2/100 Mol der Verbindung der Formel

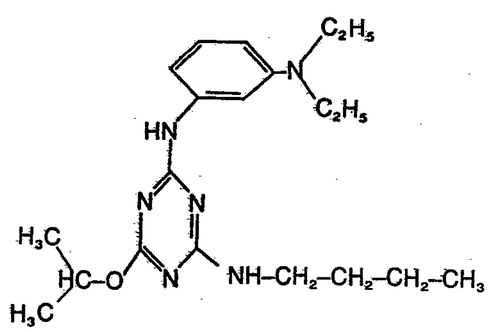

in Dimethylformamid zutropfen, wobei man den pH-Wert bei 3,5–4 hält. Nach beendeter Kupplung stellt man auf pH 7 und isoliert den gebildeten Farbstoff durch Aussalzen mit Kochsalz. Der Farbstoff der Formel

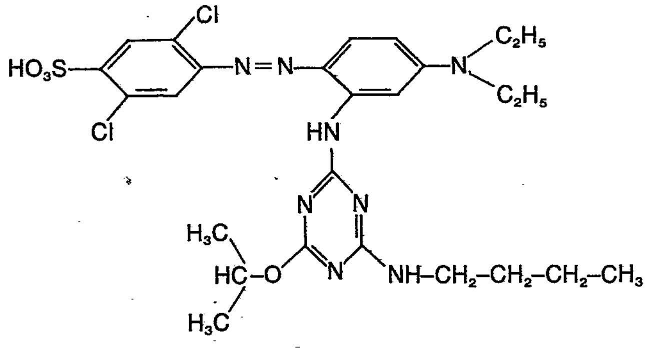

stellt als Natriumsalz ein rotes Pulver dar, welches sich in Wasser mit roter Farbe löst. Die mit diesem Farbstoff aus schwach saurem Bad auf Polyamid-Gewebe erhältlichen roten Färbungen sind gut licht- und nassecht.

Verwendet man bei sonst gleichem Vorgehen anstelle der 2,5-Dichloranilin-4-sulfosäure die in der folgenden Tabelle VI unter I aufgeführten Diazokomponenten und die unter II aufgeführten Kupplungskomponenten, so erhält man Farbstoffe mit ähnlichen Eigenschaften, welche Polyamid-Gewebe in den unter III aufgeführten Farbtönen färben.

Tabelle VI

| Nr. | I<br>Diazokomponente | II<br>Kupplungskomponente<br>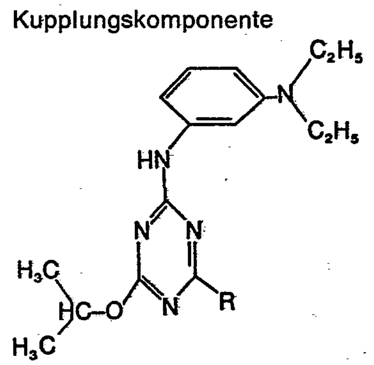<br>R | III<br>Nuance auf Polyamid |
|---|---|---|---|
| 189 | 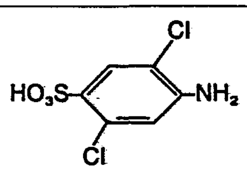 | 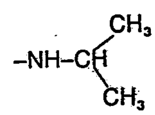 | rot |
| 190 | do. | $-NH-C_2H_5$ | do. |
| 191 | do. | $-NH-C_3H_7$ (n) | do. |
| 192 | do. | $-NH-CH-C_2H$<br>\|<br>$CH_3$ | do. |
| 193 | 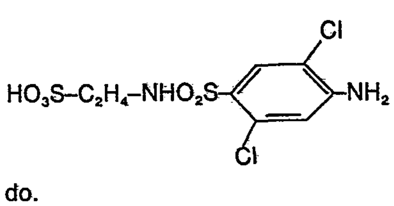 | $-NH-C_4H_9$(n) | do. |
| 194 | do. | $-NH-CH-C_2H_5$<br>\|<br>$CH_3$ | do. |
| 195 | do. | 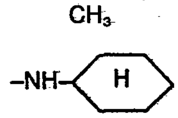 | do. |

Tabelle VI (Fortsetzung)

| | I | II | III |
|---|---|---|---|
| Nr. | Diazokomponente | Kupplungskomponente<br>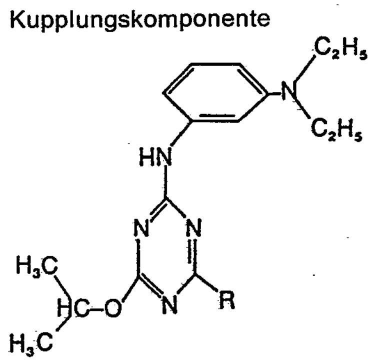<br>R | Nuance auf Polyamid |
| 196 | 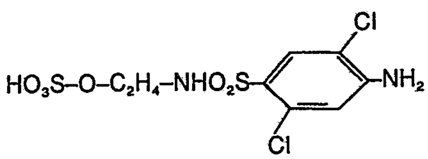 | $-NH-C_4H_9(n)$ | rot |
| 197 | do. | $-NH-CH-C_2H_5$<br>$CH_3$ | do. |
| 198 | do. | 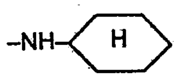 | do. |
| 199 | 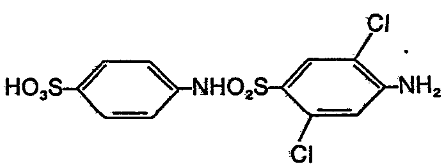 | 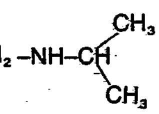 | do. |
| 200 | do. | $-NH-C_3H_7(n)$ | do. |
| 201 | do. | $-NH-C_4H_9$ (n) | do. |
| 202 | do. | $-NH-CH-C_2H_5$<br>$CH_3$ | do. |
| 203 | 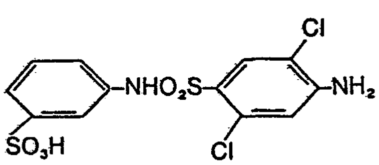 | 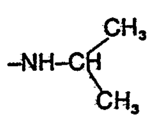 | do. |
| 204 | do. | $-NH-CH-C_2H_5$<br>$CH_3$ | do. |
| 205 | 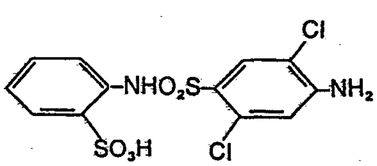 | 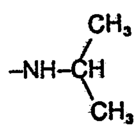 | do. |
| 206 | do. | $-NH-CH-C_2H_5$<br>$CH_3$ | do. |

Beispiel 207

Man versetzt ein Gemisch, bestehend aus 16,7 g der Verbindung der Formel

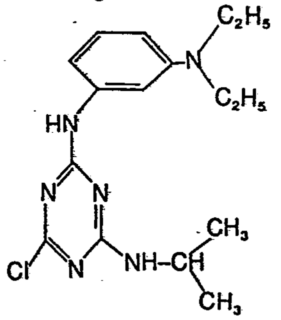

und 80 ml Äthylenglykol-monoäthyläther mit 6 g Isopropylamin und erhitzt das ganze während 2 Std. in einem Autoklav auf eine Temperatur von 105–110°. Man entfernt anschliessend das Lösungsmittel im Vakuum und behandelt den Rückstand mit Wasser, worauf man die so erhaltene Verbindung der Formel

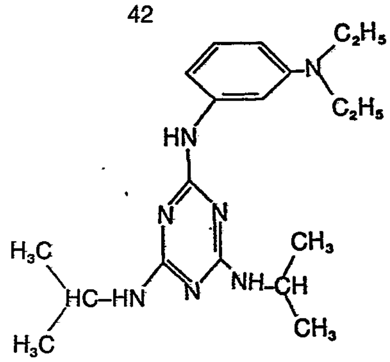

in Dimethylformamid löst. Diese Lösung kann für Kupplungen eingesetzt werden.

Verwendet man bei sonst gleichem Vorgehen anstelle von Isopropylamin äquivalente Mengen der in der folgenden Tabelle VII unter I aufgeführten Amine, so erhält man die Kupplungskomponenten der Kolonne II, welche ähnliche chemische Eigenschaften aufweisen. Bei Einsatz höhersiedender Amine kann bei Normaldruck gearbeitet werden.

Tabelle VII

| | I | II |
|---|---|---|
| | Amin | Kupplungskomponente<br>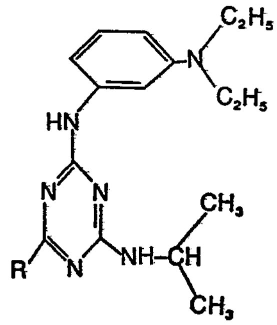<br>R |
| 208 | $H_2N-C_3H_7$ (n) | $-NH-C_3H_7$ (n) |
| 209 | $H_2N-C_4H_9$ (n) | $-NH-C_4H_9$ (n) |
| 210 | $H_2N-CH-C_2H_5$<br>\|<br>$CH_3$ | $-NH-CH-C_2H_5$<br>\|<br>$CH_3$ |
| 211 | 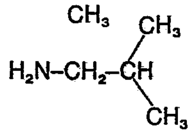 | 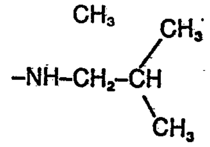 |
| 212 | $H_2N-CH_3$ | $-NH-CH_3$ |
| 213 | $H_2N-C_2H_5$ | $-NH-C_2H_5$ |
| 214 | 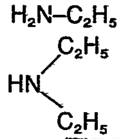 | 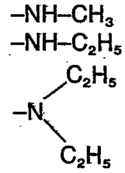 |
| 215 | 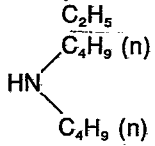 | 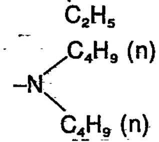 |
| 216 | 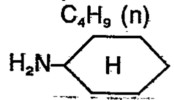 | 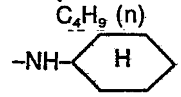 |
| 217 | 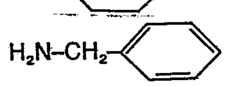 | 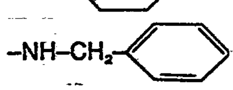 |

Beispiel 218

In eine Diazoniumsalzlösung, hergestellt aus 4,85 g 2,5-Dichloranilin-4-sulfosäure, welche man mit Natriumcarbonat auf pH 3 gestellt hat, lässt man bei 0–2° eine Dimethylformamid-Lösung enthaltend 2/100 Mol der Verbindung der Formel

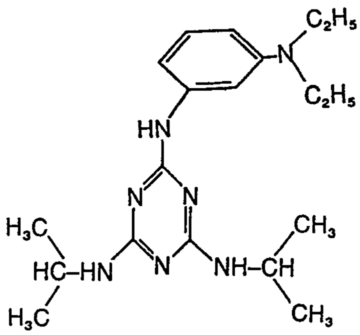

zutropfen, wobei man den pH-Wert des Gemisches bei 3,5–4 hält. Nach vollständiger Kupplung stellt man auf pH 7 und isoliert den gebildeten Farbstoff in üblicher Weise durch Aussalzen mit Kochsalz. Der Farbstoff der Formel

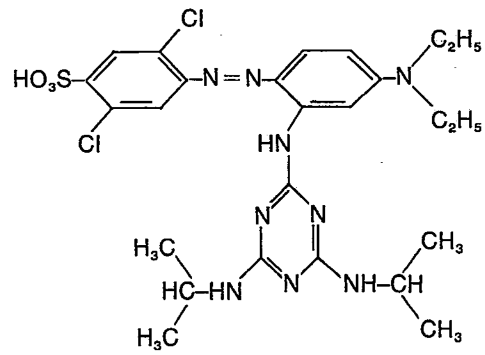

stellt als Natriumsalz nach dem Trocknen ein rotes Pulver dar, welche sich in Wasser mit roter Farbe löst. Der Farbstoff färbt Polyamid-Gewebe aus schwach saurem Bad rot und die Färbungen weisen gute Echtheitseigenschaften auf.

Verwendet man bei sonst gleichem Vorgehen anstelle der Dichloranilin-sulfosäure die in der folgenden Tabelle VIII unter I aufgeführten Diazokomponenten und anstelle der angegebenen Kupplungskomponenten die Kupplungskomponenten der Kolonne II, so erhält man Farbstoffe mit ähnlichen Eigenschaften, welche Polyamid in den unter III angegebenen Farbtönen färben.

Tabelle VIII

| | I | II | III |
|---|---|---|---|
| Nr. | Diazokomponenten | Kupplungskomponenten 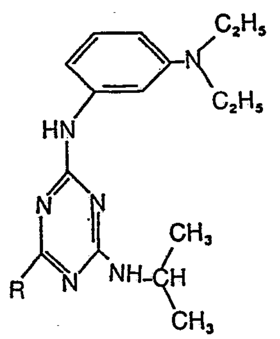 | Nuance auf Polyamid |
| | | R | |
| 219 | 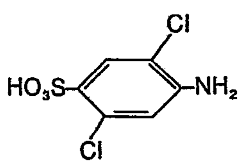 | $-NH-C_3H_7$ (n) | rot |
| 220 | do. | $-NH-CH_3$ | do. |
| 221 | do. | $-NH-C_2H_5$ | do. |
| 222 | do. | $-NH-C_4H_9$ (n) | do. |
| 223 | do. | 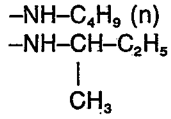 | do. |
| 224 | do. | 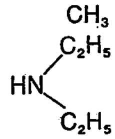 | do. |
| 225 | do. | 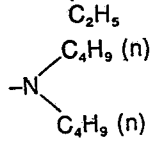 | do. |

Tabelle VIII (Fortsetzung)

| | I | II | III |
|---|---|---|---|
| Nr. | Diazokomponenten | Kupplungskomponenten 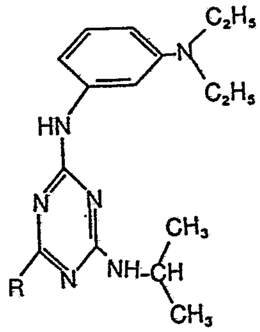 | Nuance auf Polyamid |
| | | R | |
| 226 | $HO_3S-C_2H_4-NHO_2S-$ 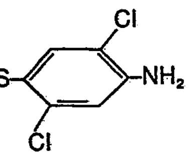 | 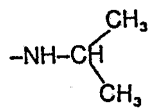 | rot |
| 227 | do. | 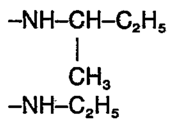 | do. |
| 228 | do. | $-NH-C_2H_5$ | do. |
| 229 | $HO_3S-O-C_2H_4-NHO_2S-$ 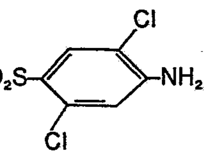 | $-NH-C_2H_5$ | do. |
| 230 | do. | 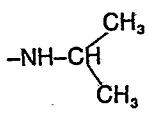 | do. |
| 231 | do. | $-NH-C_3H_7$ (n) | do. |
| 232 | do. | 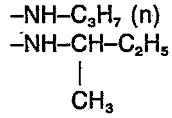 | do. |
| 233 | $HO_3S-$ 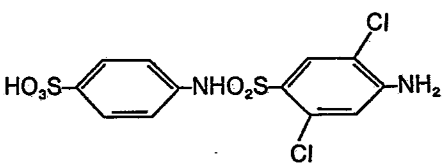 | $-NH-C_2H_5$ | do. |
| 234 | do. | 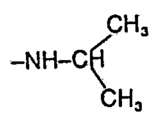 | do. |
| 235 | 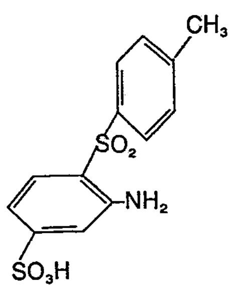 | $-NH-C_2H_5$ | do. |

Beispiel 236

Zu einer Suspension, erhalten durch Aufgiessen einer Lösung von 18,5 t Cyanurchlorid in 100 ml Aceton auf 350 g Eis und 55 ml Wasser gibt man bei einer Temperatur von 0–2° und einem pH-Wert von 7–8 allmählich 12,5 g 1-Amino-äthan-2-sulfosäure. Nach beendeter Umsetzung gibt man 16,4 g der Verbindung der Formel

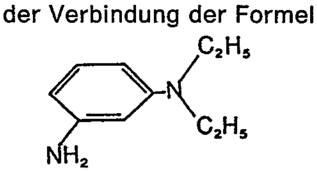

zu, erhöht den pH-Wert auf 8 mit 20%iger Natriumcarbonat-Lösung und die Temperatur auf 18–20°, wobei die Umsetzung mit der Verbindung der angegebenen Formel erfolgt. Nach erfolgter Umsetzung stellt man mit Salzsäure auf pH 7 und dampft im Vakuum zur Trockene ein. Den Rückstand verarbeitet man mit 100 ml Toluol, filtriert ab und wäscht noch zweimal mit Toluol. Nach dem Trocknen erhält man das Produkt der Formel

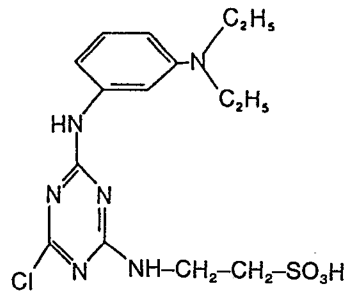

in Form des Natriumsalzes als farbloses Pulver, welches Kochsalz enthält.

Zu einem Gemisch, bestehend aus 0,1 Mol der obigen Verbindung und 400 ml Wasser gibt man 11,3 g N-Methyl-N-cyclohexylamin und 4 g Natriumhydroxyd, worauf man bis zur vollständigen Umsetzung bei 90–95° rührt. Man stellt am Schluss mit Salzsäure auf pH 7 und isoliert das Produkt der Formel

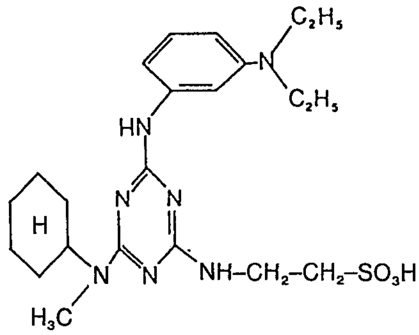

durch Aussalzen mit Kochsalz in Form seines Natriumsalzes, welches nach dem Trocknen ein farbloses Pulver darstellt, dessen wässrige Lösung sich zu Kupplungen verwenden lässt.

Vewendet man bei sonst gleichem Vorgehen anstelle von N-Methyl-N-cyclohexylamin äquivalente Mengen der in der folgenden Tabelle IX unter I aufgeführten Amine so erhält man die Kupplungskomponenten der Kolonne II, welche ähnliche chemische Eigenschaften aufweisen.

Tabelle IX

| | I | II |
|---|---|---|
| Nr. | Amine | Kupplungskomponenten 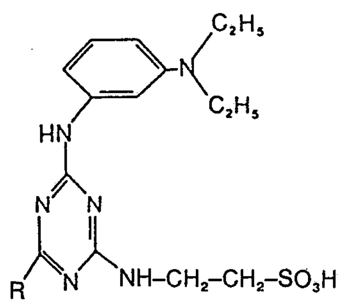 R |
| 237 | $H_2N-CH_3$ | $-NH-CH_3$ |
| 238 | $H_2N-C_2H_5$ | $-NH-C_2H_5$ |
| 239 | 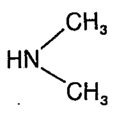 | 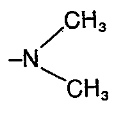 |
| 240 | $H_2N-C_3H_7$ (n) | $-NH-C_3H_7$ (n) |
| 241 | 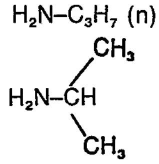 | 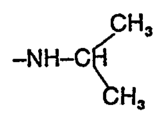 |
| 242 | $H_2N-C_4H_9$ (n) | $-NH-C_4H_9$ (n) |
| 243 | 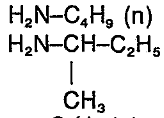 | 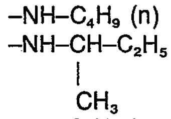 |
| 244 | 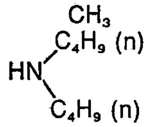 | 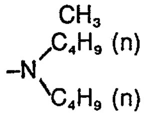 |

Tabelle IX (Fortsetzung)

| | I | II |
|---|---|---|
| Nr. | Amine | Kupplungskomponenten<br>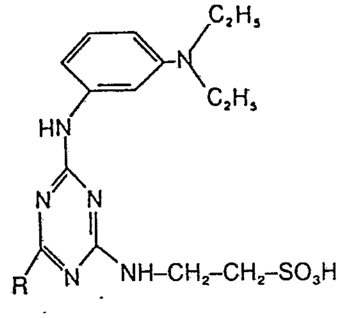<br>R |
| 245 | 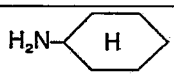 | 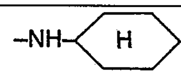 |
| 246 | 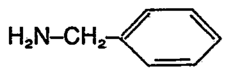 | 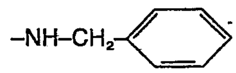 |
| 247 | 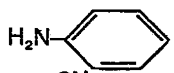 | 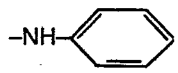 |
| 248 | 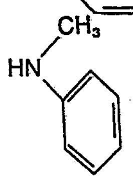 | 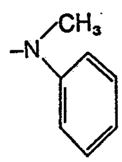 |
| 249 | 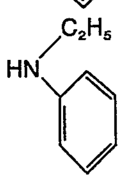 | 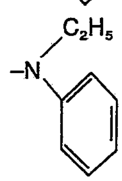 |
| 250 | $H_2N-CH_2-CH-C_4H_9$<br>\|<br>$C_2H_5$ | $-NH-CH_2-CH-C_4H_9$<br>\|<br>$C_2H_5$ |
| 251 | $H_2N-C_{10}H_{21}$ | $-NH-C_{10}H_{21}$ |

Beispiel 252

4,10 g 4-Amino-3-chlor-phenyl-methylsulfon werden mit Nitrosylschwefelsäure in 98%iger Schwefelsäure diazotiert und die erhaltene Diazolösung hierauf bei einer Temperatur von 0–2° zu einem Gemisch bestehend aus 2/100 Mol der Verbindung der Formel

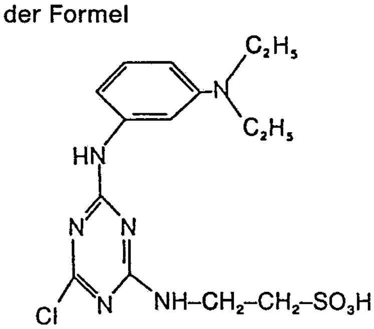

150 ml Wasser und 250 g Eis zugetropft, wobei man den pH-Wert des Gemisches durch Zutropfen von konzentrierter Natronlauge bei 3–4 hält. Man stellt am Schluss auf pH 7, erhitzt kurz auf 60° zur Verbesserung der Filtrierbarkeit, lässt auf Raumtemperatur erkalten, filtriert den ausgefallenen Farbstoff ab und wäscht denselben mit 2%iger Kochsalzlösung. Nach dem Trocknen liegt der Farbstoff der Formel

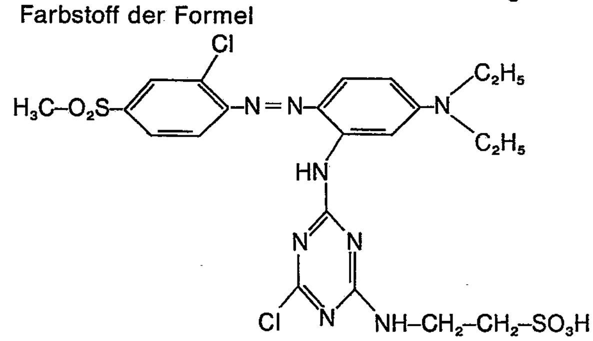

in Form seines Natriumsalzes als rotes Pulver vor, welches sich in Wasser mit roter Farbe löst.

Die mit diesem Farbstoff aus schwach saurem Bad auf Polyamid erhaltenen roten Färbungen sind gut nass- und lichtecht.

Verwendet man, bei sonst gleichem Vorgehen, anstelle der oben verwendeten Diazokomponente die in der folgenden Tabelle X unter I aufgeführten Diazokomponenten und anstelle der oben angeführten Kupplungskomponente die Kupplungskomponenten in der Kolonne II so erhält man Farbstoffe mit ähnlichen Eigenschaften, deren Farbtöne in der Kolonne III angegeben sind.

Tabelle X

| | I | II | III |
|---|---|---|---|
| Nr. | Diazokomponenten | Kupplungskomponenten | Nuance auf Polyamid |
| | | 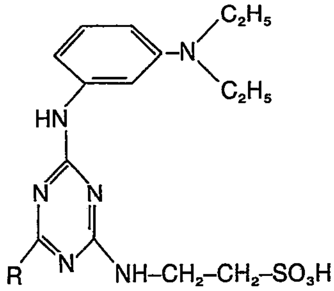 | |
| | | R | |
| 253 | 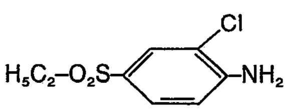 | –Cl | rot |
| 254 | 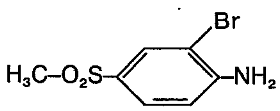 | do. | do. |
| 255 | 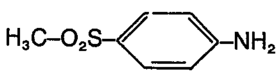 | do. | Orange |
| 256 | 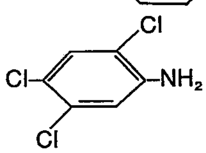 | do. | rot |
| 257 | 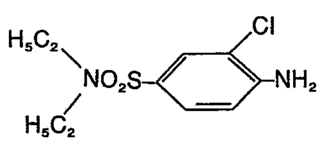 | do. | do. |
| 258 | 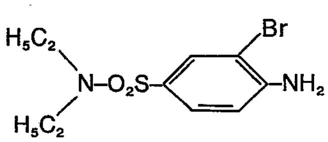 | do. | do. |
| 259 | 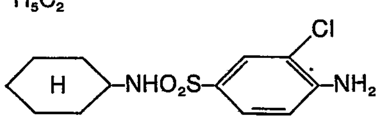 | do. | do. |
| 260 | 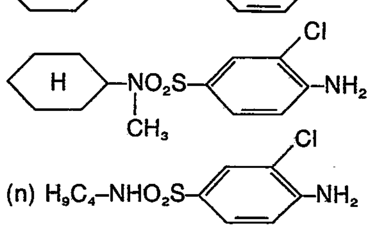 | do. | do. |
| 261 | | do. | do. |
| 262 | 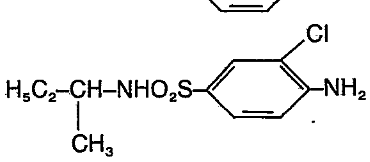 | –Cl | do. |

Tabelle X

| | I | II | III |
|---|---|---|---|
| Nr. | Diazokomponenten | Kupplungskomponenten 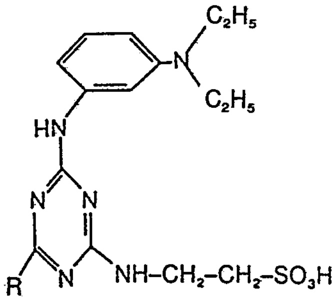 | Nuance auf Polyamid |
| | | R | |
| 263 | 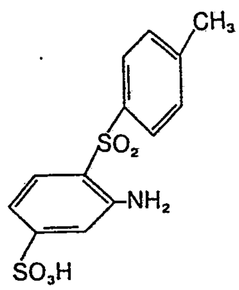 | $-NH-C_4H_9$ (n) | rot |
| 264 | do. | 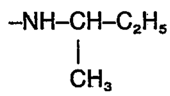 | do. |
| 265 | do. | 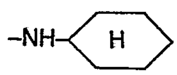 | do. |
| 266 | do. | 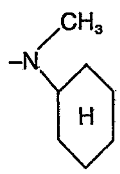 | do. |
| 267 | do. | 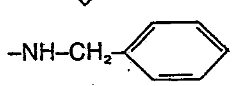 | do. |
| 268 | do. | 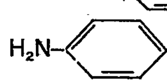 | do. |
| 269 | do. | 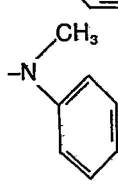 | do. |
| 270 | do. | 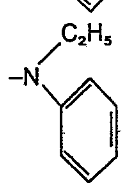 | do. |
| 271 | do. | 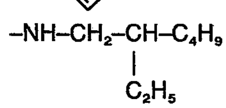 | do. |
| 272 | 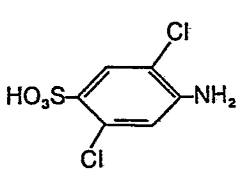 | 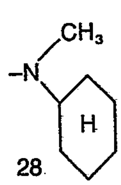 | do. |

Tabelle X (Fortsetzung)

| | I | II | III |
|---|---|---|---|
| Nr. | Diazokomponenten | Kupplungskomponenten 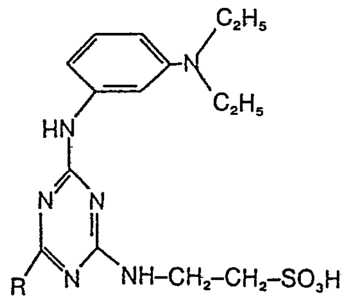 | Nuance auf Polyamid |
| | | R | |
| 273 | 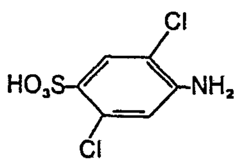 | 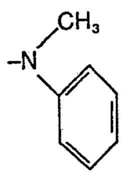 | rot |
| 274 | do. | 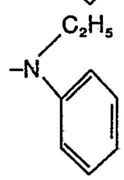 | do. |
| 275 | do. | 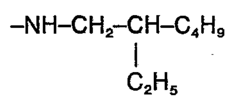 | do. |
| 276 | do. | $-NH-C_{10}H_{21}$ | do. |
| 277 | 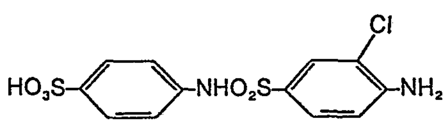 | -Cl | do. |
| 278 | do. | 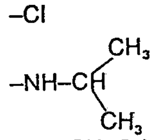 | do. |
| 279 | do. | 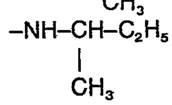 | do. |
| 280 | do. | 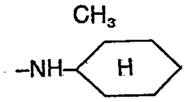 | do. |
| 281 | do. | 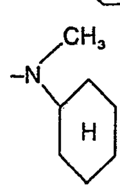 | do. |

Beispiel 282

Zu einer Suspension, erhalten durch Aufgiessen einer Lösung von 18,5 g Cyanurchlorid in 100 ml Aceton auf 350 g Eis und 55 ml Wasser gibt man eine neutrale Lösung von 17,3 g Metanilsäure in 70 ml Wasser, wobei man die Temperatur bei – 2° bis 0° und den pH-Wert mit 20%iger Natriumcarbonatlösung bei 3–3,5 hält. Nach vollständiger Umsetzung gibt man 16,4 g der Verbindung der Formel

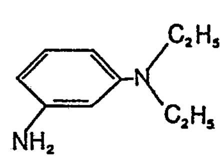

zu, erhöht die Temperatur auf 18–20° und den pH-Wert auf 7–8. Nachdem sich mit p-Dimethylamino-benzaldehyd kein primäres aromatisches Amin mehr nachweisen lässt, stellt man auf pH 7 und isoliert das gebildete Produkt durch Aussalzen mit 10 Vol.-% Kochsalz und anschliessende Filtration. Das Produkt der Formel

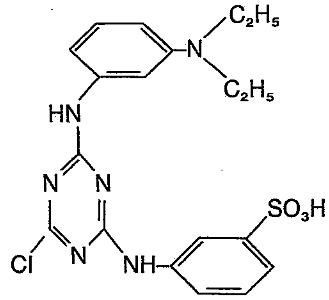

stellt nach dem Trocknen als Natriumsalz ein farbloses in Wasser lösliches Pulver dar, welches Kochsalz enthält. Die wässrige Lösung kuppelt mit Diazolösungen.

Verwendet man bei sonst gleichem Vorgehen anstelle der Metanilsäure äquivalente Mengen der 2-Naphtylamin-6-sulfosäure, so erhält man das Produkt der Formel

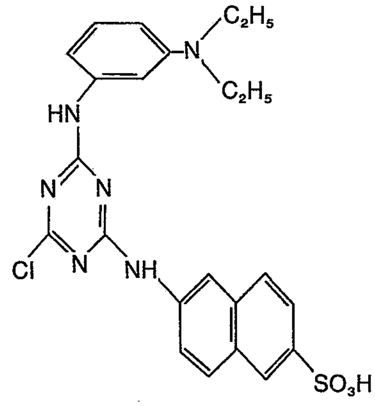

welches ähnliche Eigenschaften aufweist.

Zu einer Lösung von 0,1 Mol des ersten der beiden obigen Kondensationsprodukte in 400 ml Wasser gibt man 18,6 g Anilin, erhöht die Temperatur auf 85–90° und den pH-Wert auf 11 und rührt bis zur vollständigen Umsetzung, worauf man auf pH 8,5 stellt und den Anilin-Überschuss mit Wasserdampft abdestilliert. Man stellt auf pH 7, gibt 10 Vol.-% Kochsalz zu und isoliert das Produkt der Formel

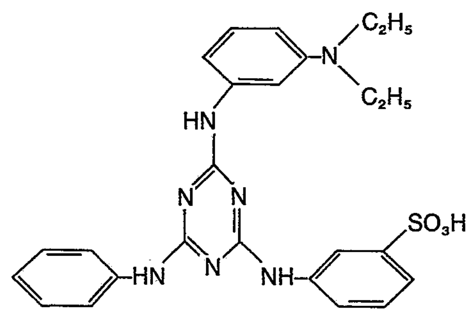

durch Filtration. Nach dem Trocknen erhält man das Natriumsalz des Produktes als farbloses Pulver, welches sich in Wasser löst. Die Lösung kuppelt auf Zusatz von Diazoverbindungen.

Verwendet man, bei sonst gleichem Vorgehen, anstelle von Anilin äquivalente Mengen der in der folgenden Tabelle XI unter I aufgeführten Amine, so erhält man die Kupplungskomponenten der Kolonne II, welche ähnliche chemische Eigenschaften aufweisen.

Tabelle XI

| | I | II |
|---|---|---|
| Nr. | Amine | Kupplungskomponenten |
| | | 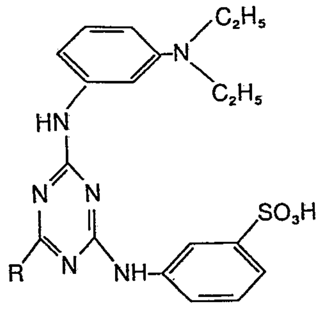 |
| | | R |
| 283 | 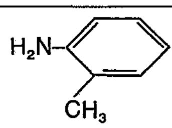 | 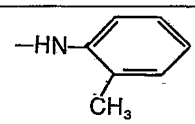 |
| 284 | 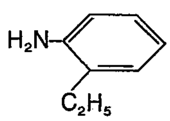 | 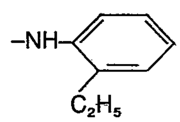 |
| 285 | 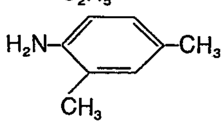 | 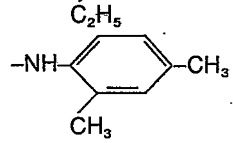 |
| 286 | 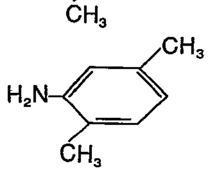 | 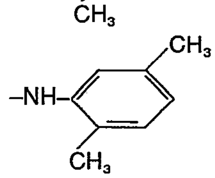 |
| 287 | 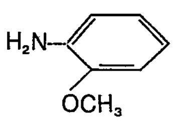 | 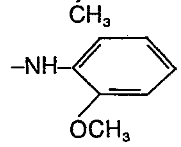 |

Beispiel 288

Ein neutrales Gemisch bestehend aus 0,1 Mol der Verbindung der Formel

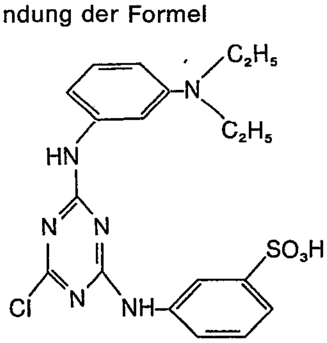

und 400 ml Wasser versetzt man mit 16,4 g Metanilsäure, worauf man den pH-Wert auf 11,5 stellt und bei einer Temperatur von 80–85° bis zur vollständigen Umsetzung rührt. Man lässt auf 40° erkalten und gibt 10 Vol.-% Kochsalz zu, worauf man das ausgefällte Produkt abfiltriert und mit 300 ml 10%iger Kochsalzlösung wäscht bis das Filtrat neutral reagiert. Nach Trocknung behandelt man das Produkt mit 100 ml Toluol, filtriert ab und wäscht mit Toluol nach. Nach nochmaliger Trocknung erhält man das Produkt der Formel

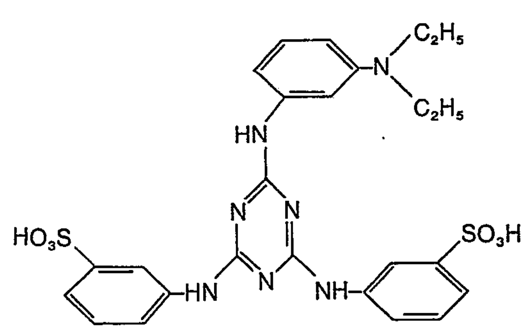

in Form des Natriumsalzes als farbloses, in Wasser lösliches Pulver. Die wässrigen Lösungen kuppeln auf Zusatz von Diazoverbindungen.

Beispiel 289

Zu einem neutralen Gemisch bestehend aus 0,1 Mol der Verbindung

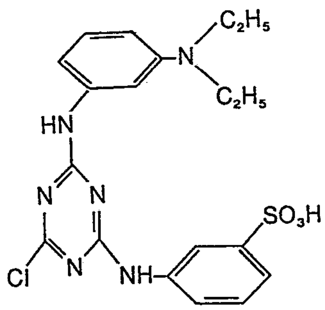

und 400 ml Wasser gibt man 10 g Cyclohexylamin, worauf man bei pH 11,5–12 und 85–90° bis zur vollständigen Umsetzung rührt. Man gibt hierauf 10 Vol.-% Kochsalz zu und isoliert das abgeschiedene Produkt durch Filtration und wäscht dasselbe mit 10%iger Kochsalzlösung. Nach dem Trocknen erhält man das Produkt der Formel

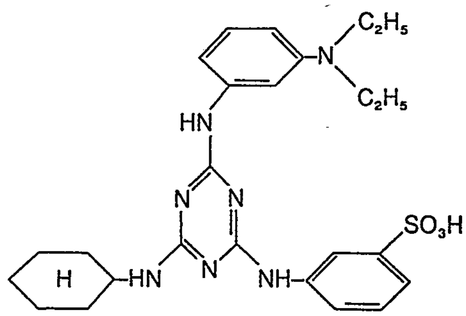

in Form des Natriumsalzes als farbloses Pulver, welches sich in Wasser lösen lässt. Die Lösungen kuppeln auf Zugabe von Diazoverbindungen.

Verwendet man bei sonst gleichem Vorgehen anstelle von Cyclohexylamin äquivalente Mengen der in der folgenden Tabelle XII unter I aufgeführten Amine so erhält man die Kupplungskomponenten der Kolonne II, welche ähnliche chemische Eigenschaften aufweisen.

Tabelle XII

| | I | II |
|---|---|---|
| Nr. | Amine | Kupplungskomponenten<br>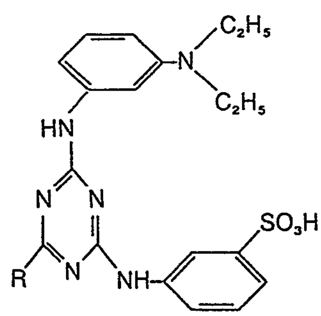<br>R |
| 290 | 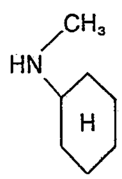 | 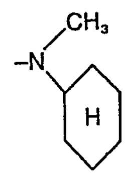 |
| 291 | 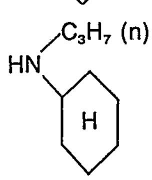 | 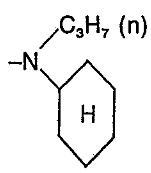 |
| 292 | 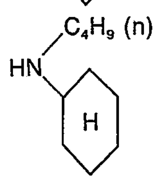 | 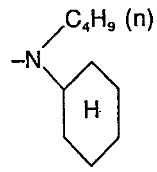 |
| 293 | $H_2N-CH_2-CH-C_4H_9$<br>\|<br>$C_2H_5$ | $-NH-CH_2-CH-C_4H_9$<br>\|<br>$C_2H_5$ |
| 294 | $H_2N-CH_2-$ 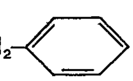 | $-NH-CH_2-$ 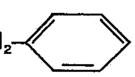 |

Tabelle XII (Fortsetzung)

| | I | II |
|---|---|---|
| Nr. | Amine | Kupplungskomponenten |
| | | 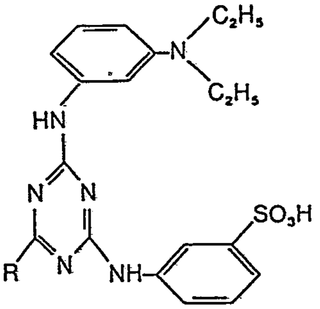 |
| | | R |
| 295 | $H_2N-CH_2-CH_2-$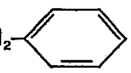 | $-NH-CH_2-CH_2-$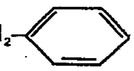 |
| 296 | $H_2N-C_{10}H_{21}$ | $-NH-C_{10}H_{21}$ |

Beispiel 297

4,10 g 4-Amino-3-chlor-phenyl-methylsulfon werden mit Nitrosylschwefelsäure in 98%iger Schwefelsäure diazotiert und die erhaltene Diazoniumsalzlösung bei einer Temperatur von 0–2° und einem pH-Wert von 3–3,5 zu einem Gemisch bestehend aus 2/100 Mol der Verbindung der Formel

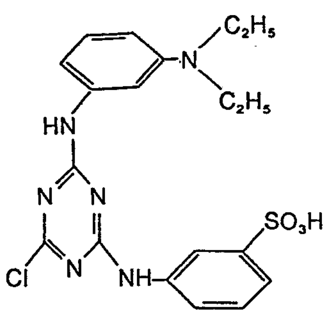

200 ml Wasser und 300 g Eis zugetropft, wobei man den pH-Wert durch Zugabe von conc. Natronlauge einstellt. Nach vollständiger Kupplung stellt man auf pH 7, erhitzt auf 50°, wobei sich der Farbstoff ölig abtrennt. Man dekantiert von der wässrigen Phase ab und trocknet den Farbstoff im Vakuum bei 70°.

Der so erhaltene Farbstoff der Formel

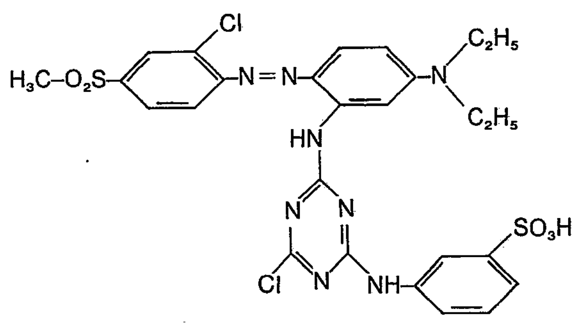

bildet als Natriumsalz ein rotes Pulver, welches sich in Wasser mit roter Farbe löst.

Mit diesem Farbstoff lassen sich auf Polyamid-Gewebe aus schwach saurem Bad rote Färbungen erzielen, welche sich durch gute Nassechtheiten und eine gute Lichtechtheit auszeichnen.

Verwendet man bei analogem Vorgehen anstelle von 4-Amino-3-chlor-Phenyl-methylsulfon die Diazokomponenten der Spalte I der folgenden Tabelle XIII und als Kupplungskomponenten diejenigen der Kolonne II, so erhält man Farbstoffe mit ähnlichen Eigenschaften, deren Farbtöne auf Polyamid in der letzten Kolonne angegeben sind.

Tabelle XIII

| | I | II | III |
|---|---|---|---|
| Nr. | Diazokomponenten | Kupplungskomponenten<br>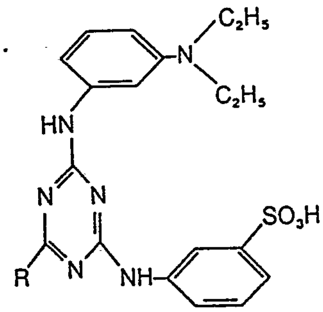 | Nuance auf Polyamid |
| | | R | |
| 298 | 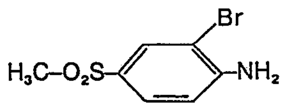 | –Cl | rot |
| 299 | 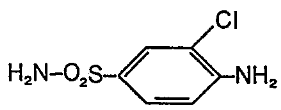 | do. | do. |
| 300 | 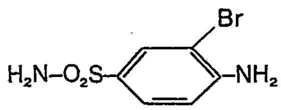 | do. | do. |
| 301 | 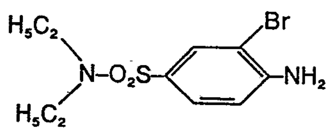 | do. | do. |
| 302 | 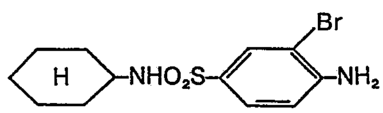 | do. | do. |
| 303 | 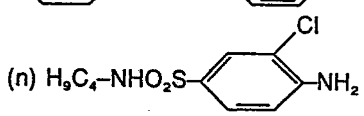 | do. | do. |
| 304 | 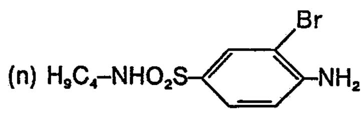 | do. | do. |
| 305 | 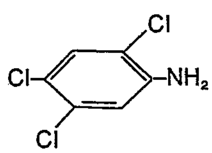 | do. | do. |
| 306 | 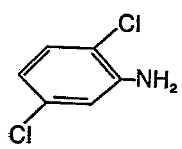 | do. | Orange |
| 307 | 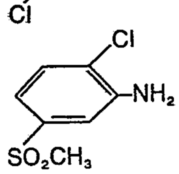 | do. | do. |
| 308 | 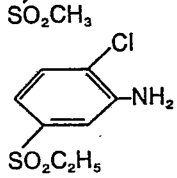 | do. | do. |

Tabelle XIII (Fortsetzung)

| | I | II | III |
|---|---|---|---|
| Nr. | Diazokomponenten | Kupplungskomponenten 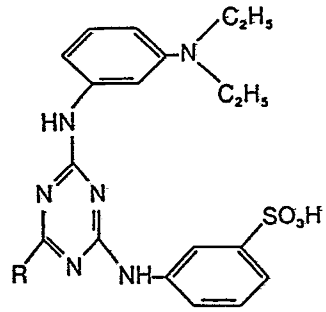 R | Nuance auf Polyamid |
| 309 | 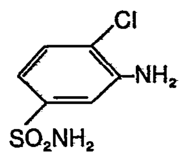 | –Cl | Orange |
| 310 | 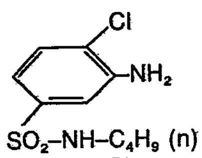 | do. | do. |
| 311 | 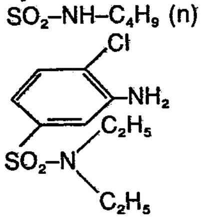 | do. | do. |
| 312 | 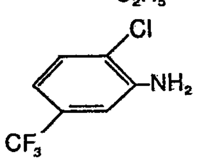 | do. | do. |
| 313 | 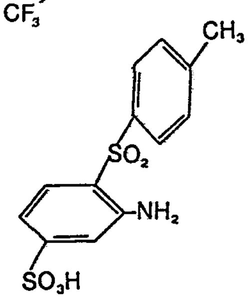 | do. | do. |
| 314 | do. | 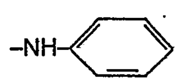 | rot |
| 315 | do. | 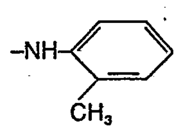 | do. |
| 316 | do. | 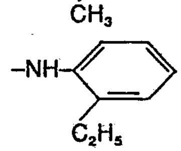 | do. |
| 317 | do. | 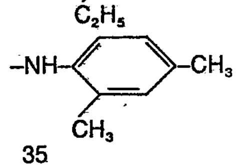 | do. |

Tabelle XIII (Fortsetzung)

| | I | II | III |
|---|---|---|---|
| Nr. | Diazokomponenten | Kupplungskomponenten 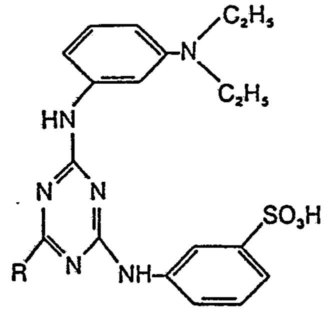 R | Nuance auf Polyamid |
| 318 | 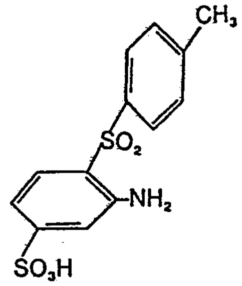 | 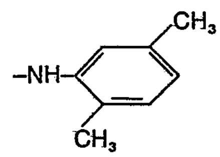 | rot |
| 319 | do. | 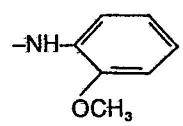 | do. |
| 320 | 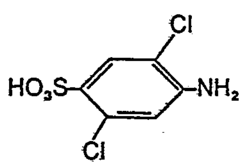 | 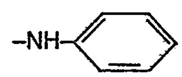 | do. |
| 321 | do. | 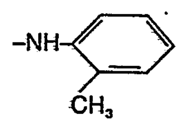 | do. |
| 322 | do. | 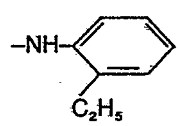 | do. |
| 323 | do. | 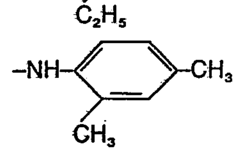 | do. |

Beispiel 324

3,90 g 2,4,5-Trichlor-anilin werden in 93%iger Schwefelsäure mit Nitrosylschwefelsäure diazotiert und hierauf die Diazolösung bei einer Temperatur von 9–2° zu einem Gemisch bestehend aus 2/100 Mol der Verbindung der Formel

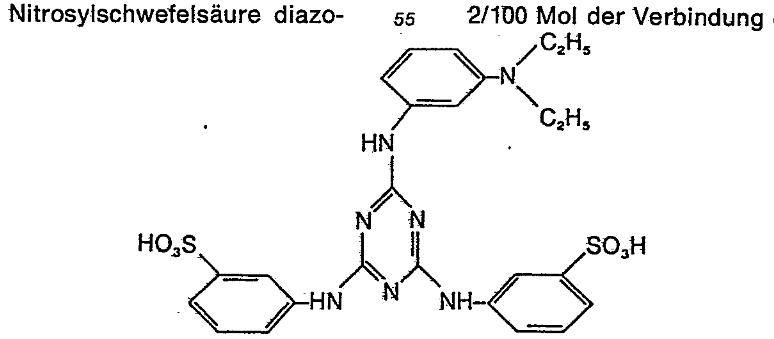

in Form des Natriumsalzes, 200 ml Wasser und 300 g Eis zugetropft, wobei man den pH-Wert bei ca. 3 hält. Nach beendeter Kupplung stellt man den pH-Wert auf 7 und isoliert den gebildeten Farbstoff durch Aussalzen mit Kochsalz und anschliessender Filtration in üblicher Weise.

Der Farbstoff der Formel

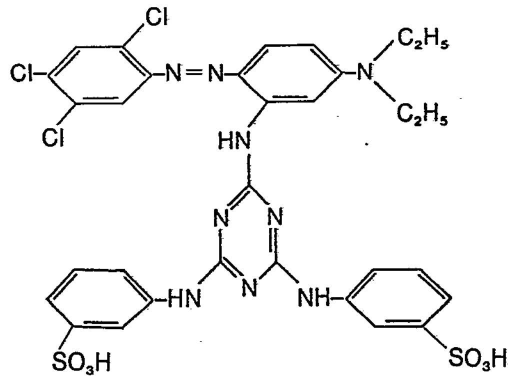

stellt in Form des Natriumsalzes nach dem Trocknen ein rotes Pulver dar, welches sich in Wasser mit roter Farbe löst.

Die mit diesem Farbstoff auf Polyamid-Gewebe aus schwach saurem Bad erzeugten roten Färbungen sind gut licht- und nassecht.

Verwendet man bei sonst gleichem Vorgehen äquivalente Mengen der in Tabelle XIV aufgeführten Diazokomponenten anstelle von Trichloranilin, so erhält man Farbstoffe mit ähnlichen Eigenschaften.

Tabelle XIV

| Nr. | Diazokomponente | Kupplungskomponente | Nuance auf PA |
|---|---|---|---|
| 325 | 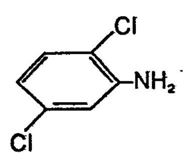 | 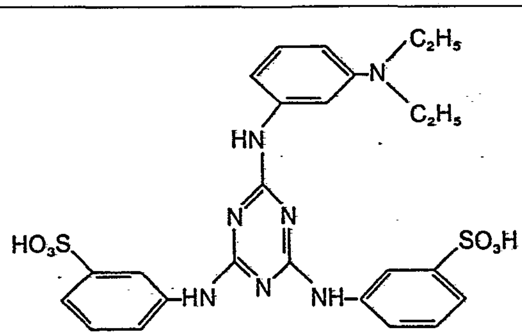 | rot |
| 326 | 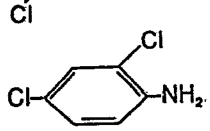 | do. | do. |
| 327 | 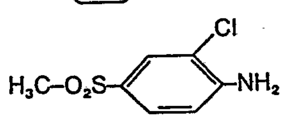 | do. | do. |
| 328 | 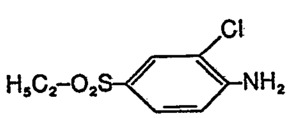 | do. | do. |
| 329 | 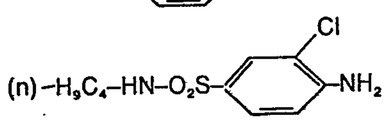 | do. | do. |
| 330 | 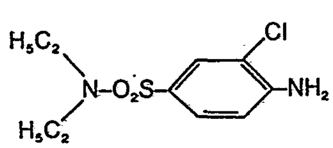 | do. | do. |

Tabelle XIV (Fortsetzung)

| Nr. | Diazokomponente | Kupplungskomponente | Nuance auf PA |
|---|---|---|---|
| 331 | 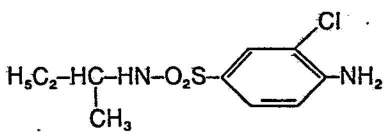 | 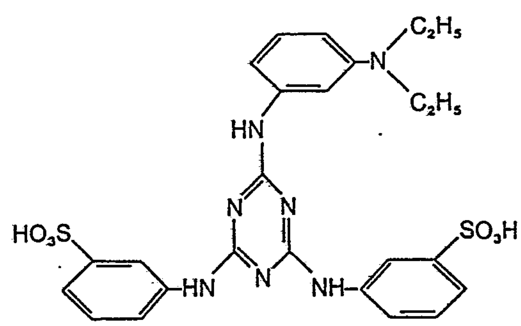 | rot |
| 332 | 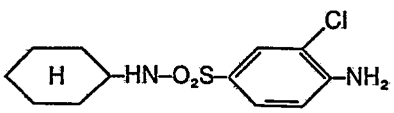 | do. | do. |
| 333 | 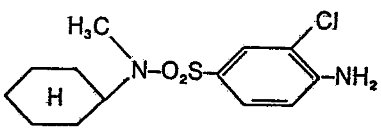 | do. | do. |
| 334 | 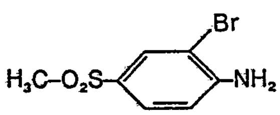 | do. | do. |
| 335 | 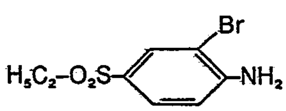 | do. | do. |
| 336 | 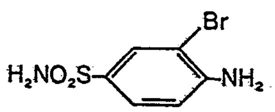 | do. | do. |
| 337 | 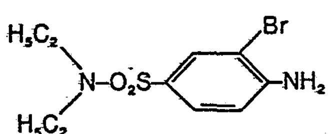 | do. | do. |
| 338 | 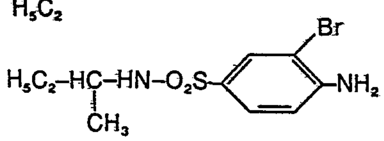 | do. | do. |
| 339 | 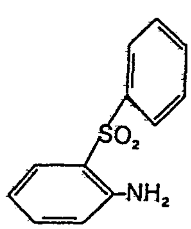 | do. | do. |

Beispiel 340

5,85 g 2,5-Dichloranilin-4-sulfosäure werden indirekt diazotiert und die Diazolösung hierauf bei 0–2° zu einem Gemisch bestehend aus 2/100 Mol der Verbindung der Formel

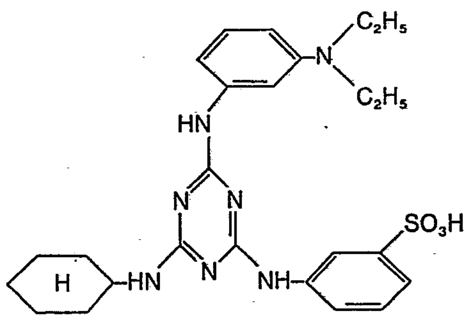

in Form des Natriumsalzes und 100 ml Wasser zugetropft, wobei man den pH-Wert mit Natronlauge bei 3–4 hält. Nach beendeter Kupplung stellt man auf pH 7 und isoliert den gebildeten Farbstoff in üblicher Weise durch Aussalzen mit Kochsalz. Der Farbstoff der Formel

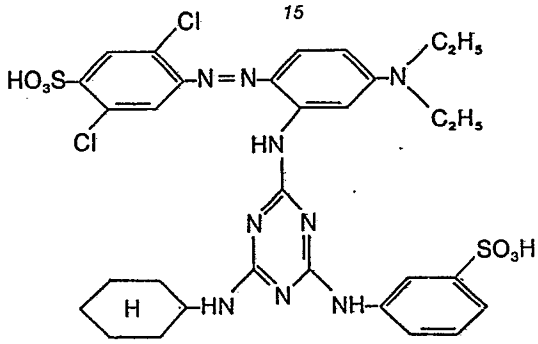

stellt nach dem Trocknen in Form des Natriumsalzes ein rotes Pulver dar, welches sich in Wasser mit roter Farbe löst.

Die mit diesem Farbstoff aus schwach saurem Bad auf Polyamid-Gewebe erzeugten roten Färbungen sind gut licht- und nassecht.

Verwendet man bei sonst gleichem Vorgehen anstelle der Dichloranilin-sulfosäure die in der folgenden Tabelle XV in Kolonne I aufgeführten Diazokomponenten und anstelle der oben eingesetzten Kupplungskomponente die Kupplungskomponenten gemäss Kolonne II, so erhält man Farbstoffe mit ähnlichen Eigenschaften.

Tabelle XV

| | I | II | III |
|---|---|---|---|
| Nr. | Diazokomponenten | Kupplungskomponenten 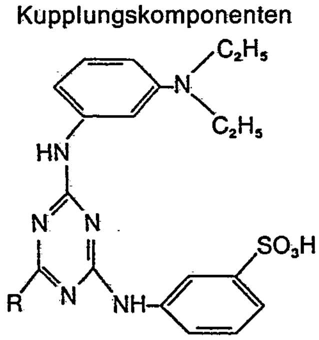 R | Nuance auf Polyamid |
| 341 | 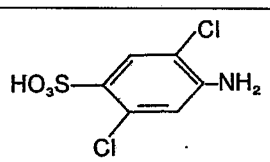 | 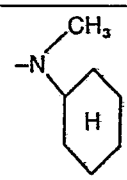 | rot |
| 342 | do. | 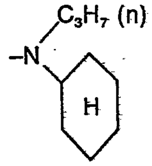 | do. |

Tabelle XV (Fortsetzung)

| I | | II | III |
|---|---|---|---|
| Nr. | Diazokomponenten | Kupplungskomponenten<br>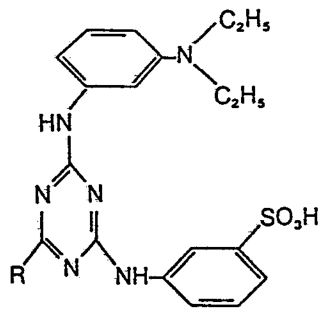<br>R | Nuance auf Polyamid |
| 343 | 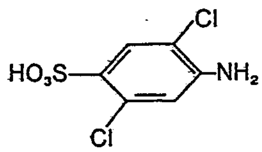 | 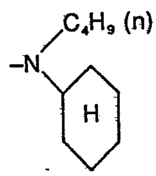 | rot |
| 344 | do. | $-NH-CH_2-CH-C_4H_9$<br>\|<br>$C_2H_5$ | do. |
| 345 | do. | 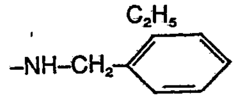 | do. |
| 346 | do. | 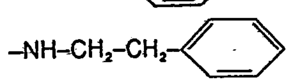 | do. |
| 347 | do. | $-NH-C_{10}H_{21}$ | do. |
| 348 | 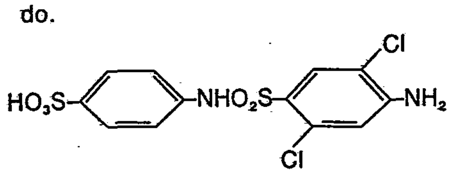 | 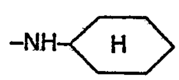 | do. |
| 349 | do. | 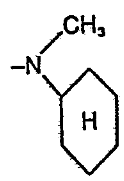 | do. |
| 350 | do. | 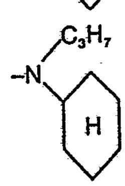 | do. |
| 351 | do. | 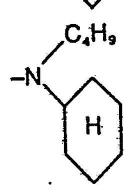 | do. |
| 352 | do. | $-NH-CH_2-CH-C_4H_9$<br>\|<br>$C_2H_5$ | do. |
| 353 | do. | 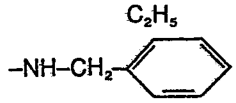 | do. |
| 354 | do. | 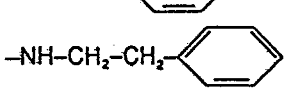 | do. |

Tabelle XV (Fortsetzung)

| | I | II | III |
|---|---|---|---|
| Nr. | Diazokomponenten | Kupplungskomponenten<br>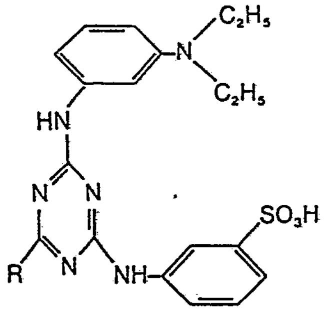<br>R | Nuance auf Polyamid |
| 355 | 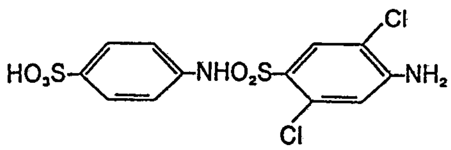 | $-NH-C_{10}H_{21}$ | rot |
| 356 | 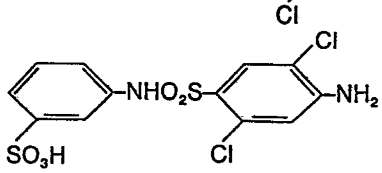 | 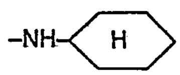 | do. |
| 357 | do. | 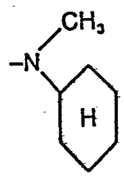 | do. |
| 358 | do. | 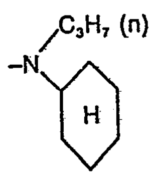 | do. |
| 359 | do. | 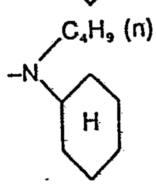 | do. |
| 360 | do. | 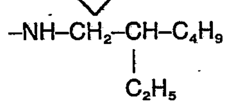 | do. |
| 361 | do. | 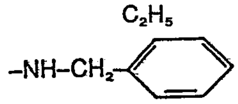 | do. |
| 362 | do. | 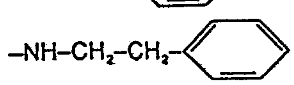 | do. |
| 363 | do. | $-NH-C_{10}H_{21}$ | do. |
| 364 | 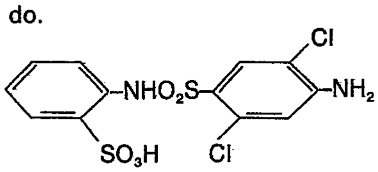 | 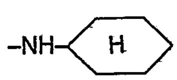 | do. |
| 365 | do. | 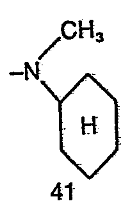 | do. |

Tabelle XV (Fortsetzung)

| | I | II | III |
|---|---|---|---|
| Nr. | Diazokomponenten | Kupplungskomponenten 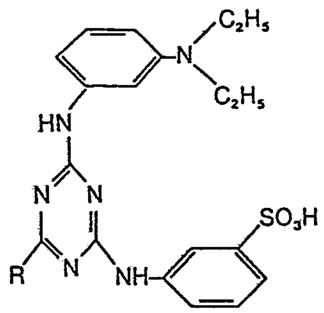 R | Nuance auf Polyamid |
| 366 | 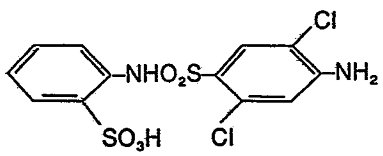 | 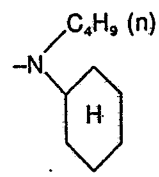 | rot |
| 367 | do. | 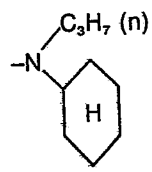 | do. |
| 368 | do. | $-NH-CH_2-CH(C_2H_5)-C_4H_9$ | do. |
| 369 | do. | 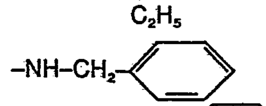 | do. |
| 370 | do. | 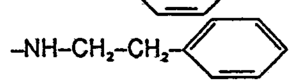 | do. |
| 371 | do. | $-NH-C_{10}H_{21}$ | do. |
| 372 | 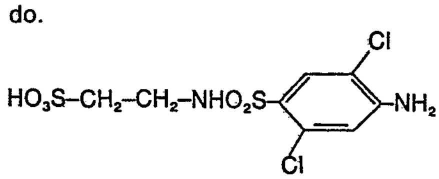 | 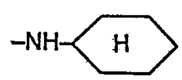 | do. |
| 373 | do. | 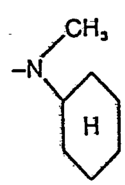 | do. |
| 374 | do. | 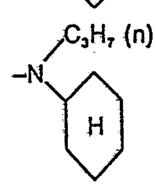 | do. |
| 375 | do. | 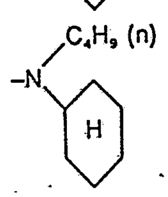 | do. |

Tabelle XV (Fortsetzung)

| | I | II | III |
|---|---|---|---|
| Nr. | Diazokomponenten | Kupplungskomponenten<br>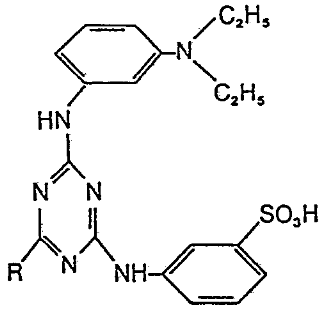<br>R | Nuance auf Polyamid |
| 376 | 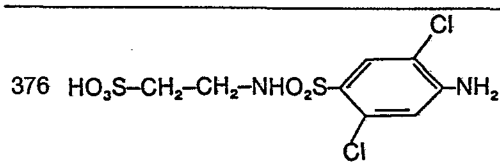 | $-NH-CH_2-CH-C_4H_9$<br>$C_2H_5$ | rot |
| 377 | do. | 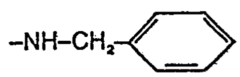 | do. |
| 378 | do. | 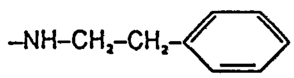 | do. |
| 379 | do. | $-NH-C_{10}H_{21}$ | do. |
| 380 | 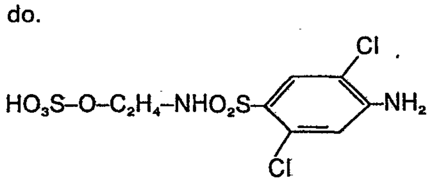 | 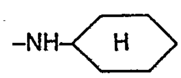 | do. |
| 381 | do. | 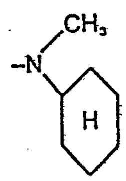 | do. |
| 382 | do. | 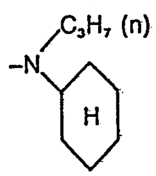 | do. |
| 383 | do. | 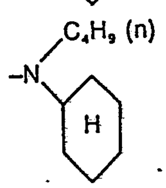 | do. |
| 384 | do. | $-NH-CH_2-CH-C_4H_9$<br>$C_2H_5$ | do. |
| 385 | do. | 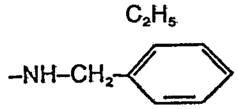 | do. |
| 386 | do. | 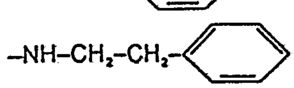 | do. |
| 387 | do. | $-NH-C_{10}H_{21}$ | do. |

Tabelle XV (Fortsetzung)

| I | | II | III |
|---|---|---|---|
| Nr. | Diazokomponenten | Kupplungskomponenten 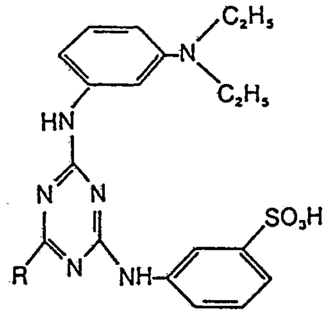 R | Nuance auf Polyamid |
| 388 | 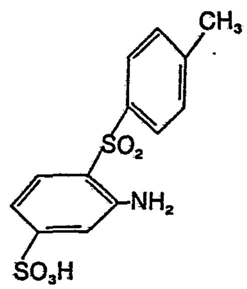 | 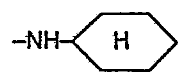 | rot |
| 389 | do. | 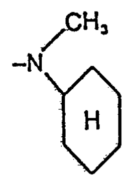 | do. |
| 390 | do. | 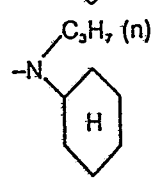 | do. |
| 391 | do. | 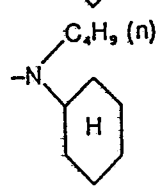 | do. |
| 392 | do. | 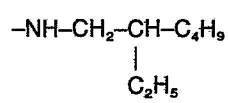 | do. |
| 393 | do. | 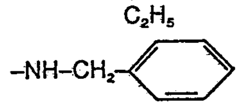 | do. |
| 394 | do. | 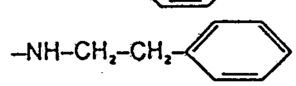 | do. |
| 395 | do. | $-NH-C_{10}H_{21}$ | do. |

Beispiel 396

4,10 g 4-Amino-3-chlor-phenyl-methyl-sulfon werden in 98%iger Schwefelsäure mit Nitrosylschwefelsäure diazotiert und die erhaltene Diazolösung anschliessend bei 0–2° zu einem Gemisch bestehend aus 2/100 Mol der Verbindung der Formel

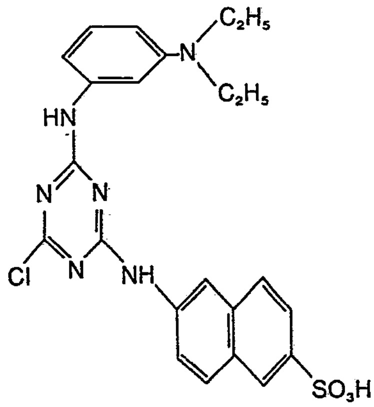

in Form des Natriumsalzes, 200 ml Wasser und 300 g Eis zugetropft, wobei man die Temperatur bei 0–2° und den pH-Wert mit Natronlauge bei 3–4 hält. Nach beendeter Kupplung wird auf pH 7 gestellt und der Farbstoff wie üblich durch Aussalzen mit Kochsalz isoliert. Der Farbstoff bildet nach dem Trocknen ein rotes Pulver, welches sich in Wasser mit roter Farbe löst.

Der Farbstoff hat die Formel

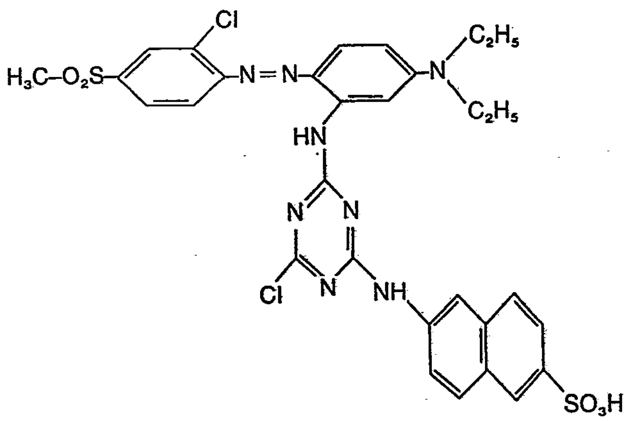

und ergibt auf Polyamid-Gewebe, aus schwach saurem Bad gefärbt, rote Färbungen, welche gut licht- und nassecht sind.

Verwendet man bei analogem Vorgehen anstelle von 4-Amino-3-chlor-phenyl-methylsulfon äquivalente Mengen der in Tabelle XVI aufgeführten Diazokomponenten, so erhält man Farbstoffe mit ähnlichen Eigenschaften.

Tabelle XVI

| Nr. | Diazokomponente | Kupplungskomponente | Farbton auf PA |
|---|---|---|---|
| 397 | 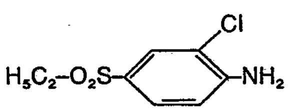 | 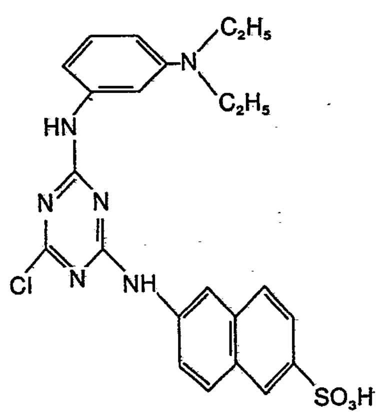 | rot |
| 398 | 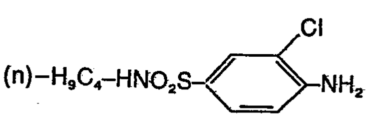 | do. | do. |

Tabelle XVI (Fortsetzung)

| Nr. | Diazokomponente | Kupplungskomponente | Farbton auf PA |
|---|---|---|---|
| 399 | 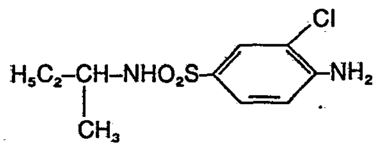 | 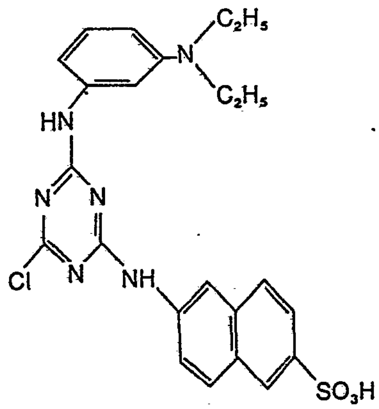 | rot |
| 400 | 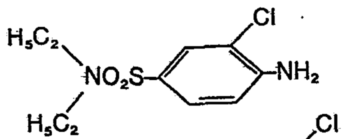 | do. | do. |
| 401 | 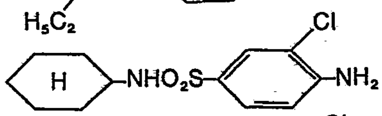 | do. | do. |
| 402 | 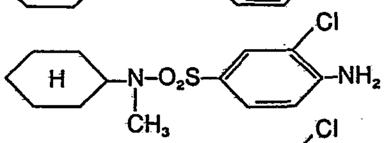 | do. | do. |
| 403 | 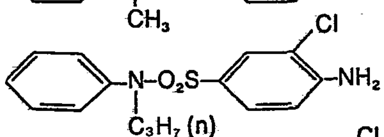 | do. | do. |
| 404 | 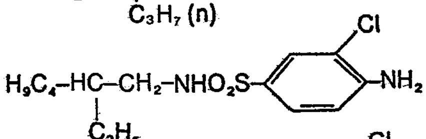 | do. | do. |
| 405 | 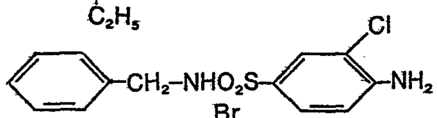 | do. | do. |
| 406 | 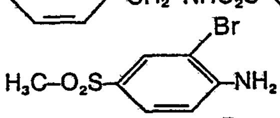 | do. | do. |
| 407 | 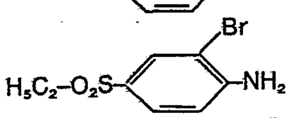 | do. | do. |
| 408 | 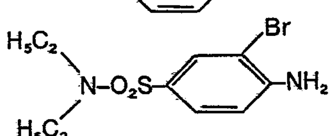 | do. | do. |
| 409 | 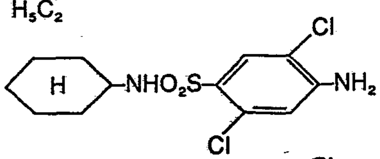 | do. | do. |
| 410 | 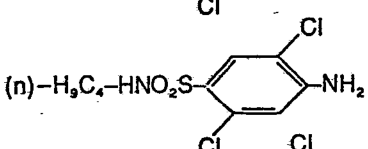 | do. | do. |
| 411 | 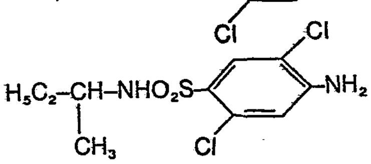 | do. | do. |

Tabelle XVI (Fortsetzung)

| Nr. | Diazokomponente | Kupplungskomponente | Farbton auf PA |
|---|---|---|---|
| 412 | 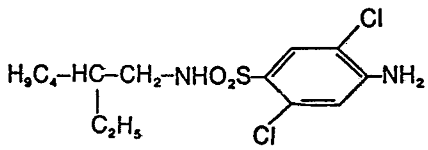 | 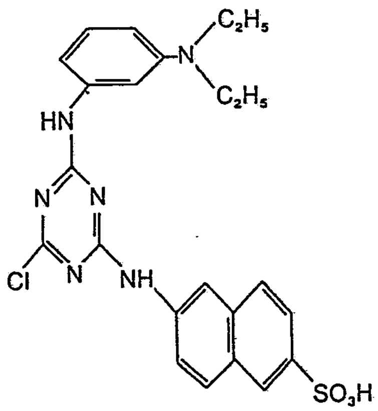 | rot |
| 413 | 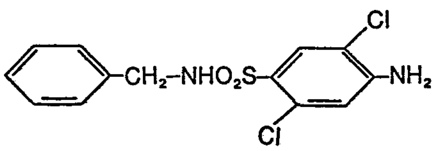 | do. | do. |

Beispiel 414

Man bereitet ein Färbebad aus 4000 Teilen Wasser, 4 Teilen Ammoniumacetat, 2 Teilen des Farbstoffes gemäss Beispiel 10 und soviel Essigsäure, dass der pH-Wert des Bades 6 beträgt. In das erhaltene Färbebad geht man mit 100 Teilen eines synthetischen Polyamidtricots ein, erhitzt es innerhalb einer halben Stunde zum Kochen und färbt 45 Minuten bei 100 °C. Man erhält eine rote Färbung mit guten Nassechtheiten.

Beispiel 415

100 Teile Wollstrickgarn werden bei 50° in ein Färbebad eingeführt, das auf 4000 Teile Wasser 2 Teile des Farbstoffs des Beispiels 10, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine rote Wollfärbung mit guten Echtheitseigenschaften.

**Patentansprüche**

1. Monoazoverbindungen der Formel I

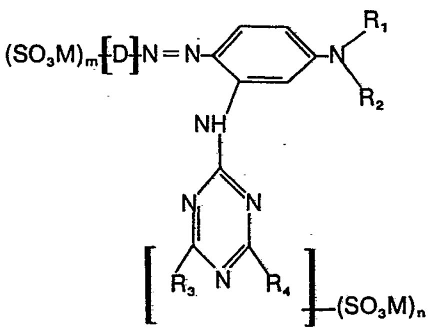

(I)

worin bedeuten:

D den Rest einer aromatischen oder heterocyclischen Diazokomponente,

$R_1$ und $R_2$ unabhängig voneinander einen Alkylrest mit 1 bis 4 Kohlenstoffatomen,

$R_3$ und $R_4$ unabhängig voneinander einen der folgenden Reste: Alkoxy mit 1 bis 10 Kohlenstoffatomen, gegebenenfalls substituiertes Monoalkylamino, wobei der Alkylrest 1 bis 10 Kohlenstoffatome aufweist, Monoarylamino, Halogen, N-Aryl-N-alkyl-amino, Dialkylamino ($C_1$–$C_4$), Alkylmercapto, Cyclohexyloxy, N-Alkyl-N-cyclohexylamino und Cyclohexylamino,

M Wasserstoff oder ein Äquivalent eines Kations,

m die Zahlen 0 oder 1, und

n die Zahlen 0, 1 oder 2 mit der Bedingung, dass die Summe von m und n den Zahlenbereich von 1 bis 2 bedeutet.

2. Monoazoverbindungen gemäss Anspruch 1, dadurch gekennzeichnet, dass m die Zahl 1 und n die Zahl 0 bedeutet.

3. Monoazoverbindungen gemäss Anspruch 1, dadurch gekennzeichnet, dass m die Zahl 1 und n die Zahl 1 bedeutet.

4. Monoazoverbindungen gemäss den Ansprüchen 1 bis 3, dadurch gekennzeichnet, dass D einen Phenylrest darstellt, der ausser durch die $(SO_3M)_m$-Gruppe noch weitersubstituiert ist.

5. Monoazoverbindungen gemäss Anspruch 4, dadurch gekennzeichnet, dass D einen Phenylrest darstellt, der ein- oder mehrmals, gleich oder verschieden substituiert ist durch: Halogen, $CF_3 \cdot SO_2 \cdot$ Alkyl, $SO_2 \cdot$ Aryl, $SO_2NH_2$, $SO_2N \cdot$ (alkyl)N · (cyclohexyl), $SO_2N(alkyl)_2$ oder $SO_2NH \cdot R$, worin R bedeutet: Alkyl, ($C_1$–$C_8$) gegebenenfalls substituiert durch Phenyl, Alkyl-O-$SO_3M$, Aryl oder Cyclohexyl.

6. Monoazoverbindungen gemäss den Ansprüchen 1 bis 5, dadurch gekennzeichnet, dass $R_1$ und $R_2$ die gleichen Alkylreste darstellen.

7. Monoazoverbindungen gemäss Anspruch 6, dadurch gekennzeichnet, dass $R_1$ und $R_2$ je $C_2H_5$ bedeuten.

8. Monoazoverbindungen gemäss Anspruch 1, dadurch gekennzeichnet, dass $R_3$ Halogen, Monoalkylamino mit 1 bis 10 Kohlenstoffatomen im Alkylrest, gegebenenfalls substituiert durch Phenyl, N · N-Dialkylamino, Cyclohexylamino, N-Alkyl-N-cyclohexyl-amino, Arylamino oder N-Alkyl-N-arylamino und $R_4$ Alkoxy mit 1 bis 8 Kohlenstoffatomen, Cyclohexyloxy, Monoalkylamino, gegebenenfalls substituiert durch Phenyl, Cyclohexylamino, Arylamino oder N · N-Dialkylamino bedeutet.

9. Monoazoverbindungen gemäss den Ansprüchen 2 und 4 bis 8, dadurch gekennzeichnet, dass $R_3$ Halogen, insbesondere Chlor und $R_4$ Alkoxy mit 1 bis 8 Kohlenstoffatomen, insbesondere Isopropoxy bedeuten.

10. Monoazoverbindungen gemäss den Ansprüchen 3 bis 8, dadurch gekennzeichnet, dass $R_3$ Arylamino, N-Alkyl-N-aryl-amino, N · N-Dialkylamino, N-Alkyl-N-cyclohexyl-amino, Cyclohexylamino oder Monoalkylamino mit 1 bis 10 Kohlenstoffatomen und $R_4$ Arylamino vor allem Phenylamino bedeutet.

11. Monoazoverbindung gemäss Anspruch 1 der Formel

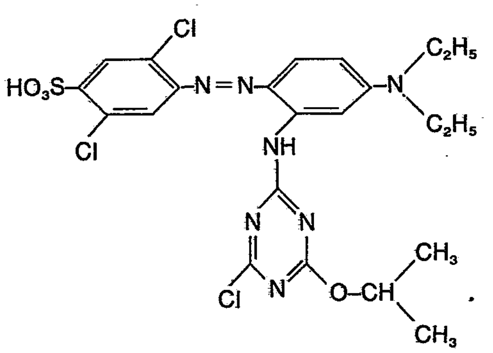

12. Monoazoverbindung gemäss Anspruch 1 der Formel

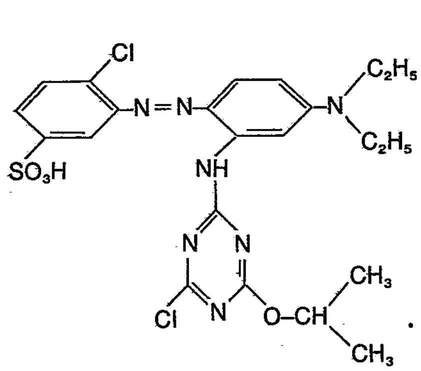

13. Monoazoverbindung gemäss Anspruch 1 der Formel

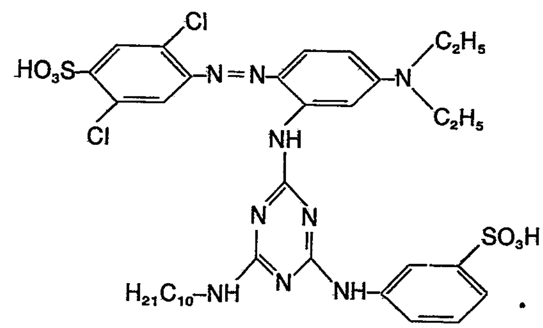

14. Monoazoverbindung gemäss Anspruch 1 der Formel

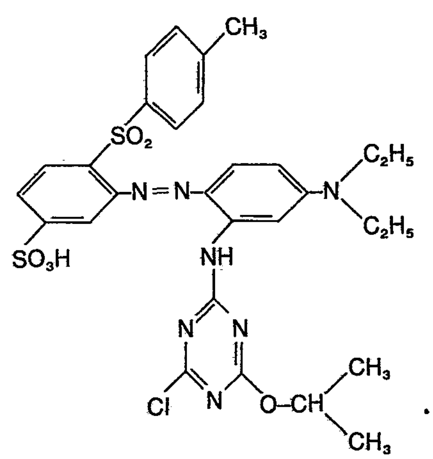

15. Verfahren zur Herstellung von Monoazoverbindungen der Formel I gemäss Anspruch 1, dadurch gekennzeichnet, dass man ein Amin der Formel II

$$(SO_3M)_m-[-D-]-NH_2 \qquad II$$

diazotiert und mit einer Kupplungskomponente der Formel III

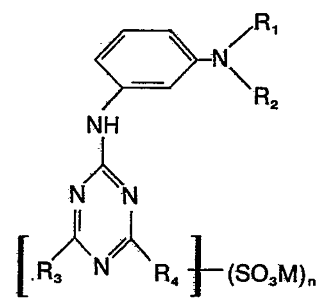

III

worin die Symbole D, M, m, $R_1$, $R_2$, $R_3$, $R_4$ und n die unter Formel I angegebene Bedeutung haben, kuppelt.

16. Verfahren gemäss Anspruch 15, dadurch gekennzeichnet, dass man ein Amin der Formel II verwendet, worin m die Zahl 1 bedeutet und eine Kupplungskomponente der Formel III verwendet, worin n die Zahl 0 bedeutet.

17. Verfahren gemäss Anspruch 15, dadurch gekennzeichnet, dass man ein Amin der Formel II verwendet, worin m die Zahl 1 bedeutet und eine Kupplungskomponente der Formel III verwendet, worin n die Zahl 1 bedeutet.

18. Verfahren gemäss den Ansprüchen 15 bis 17, dadurch gekennzeichnet, dass man ein Amin der Formel II verwendet, worin D einen Phenylrest darstellt, der ausser durch die $(SO_3M)_m$-Gruppe noch weiter substituiert ist.

19. Verfahren gemäss Anspruch 18, dadurch gekennzeichnet, dass D einen Phenylrest darstellt, der ein- oder mehrmals, gleich oder verschieden substituiert ist durch: Halogen, $CF_3$, $SO_2$ · Alkyl, $SO_2$ · Aryl, $SO_2NH_2$, $SO_2N$ · (alkyl) N · (cyclohexyl), $SO_2N(alkyl)_2$ oder $SO_2NH$ · R, worin R bedeutet: Alkyl ($C_1$–$C_8$) gegebenenfalls substituiert durch Phenyl, Alkyl-O-$SO_3M$, Aryl oder Cyclohexyl.

20. Verfahren gemäss den Ansprüchen 15 bis 19, dadurch gekennzeichnet, dass man eine Kupplungskomponente der Formel III verwendet, worin $R_1$ und $R_2$ die gleichen Alkylreste darstellen.

21. Verfahren gemäss Anspruch 20, dadurch gekennzeichnet, dass man eine Kupplungskomponente der Formel III verwendet, worin $R_1$ und $R_2$ je $C_2H_5$ bedeuten.

22. Verfahren gemäss Anspruch 15, dadurch gekennzeichnet, dass man eine Kupplungskomponente der Formel III verwendet, worin $R_3$ Halogen, Monoalkylamino mit 1 bis 10 Kohlenstoffatomen im Alkylrest, gegebenenfalls substituiert durch Phenyl, Dialkylamino, Cyclohexylamino, N-Alkyl-N-cyclohexyl-amino, Arylamino oder N-Alkyl-N-aryl-amino und $R_4$ Alkoxy mit 1 bis 8 Kohlenstoffatomen, Cyclohexyloxy, Monoalkylamino, gegebenenfalls substituiert durch Phenyl, Cyclohexylamino, Arylamino oder Dialkylamino bedeutet.

23. Verfahren gemäss den Ansprüchen 16 und 18 bis 22, dadurch gekennzeichnet, dass man eine Kupplungskomponente der Formel III verwendet, worin $R_3$ Halogen, insbesondere Chlor und $R_4$ Alkoxy mit 1 bis 8 Kohlenstoffatomen, insbesondere Isopropoxy bedeuten.

24. Verfahren gemäss den Ansprüchen 17 bis 22, dadurch gekennzeichnet, dass man eine Kupplungskomponente der Formel III verwendet, worin $R_3$ Arylamino, N-Alkyl-N-aryl-amino, Dialkylamino, N-Alkyl-N-cyclohexyl-amino, Cyclohexylamino oder Monoalkylamino mit 1 bis 10 Kohlenstoffatomen und $R_4$ Arylamino, vor allem Phenylamino bedeutet.

25. Verwendung der Monoazoverbindungen gemäss Anspruch 1 oder der nach dem Verfahren gemäss Anspruch 15 erhaltenen Monoazoverbindungen als Farbstoffe zum Färben und Bedrucken von Textilmaterialien, welche mit sauren Farbstoffen färbbar sind.

26. Verwendung gemäss Anspruch 25 zum Färben und Bedrucken von Wolle oder Polyamid.

27. Amine der Formel III

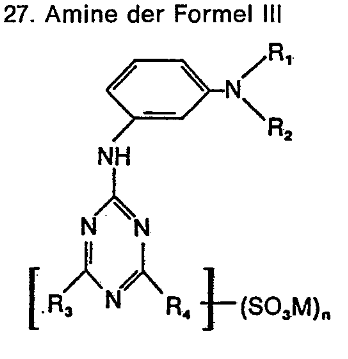

III

worin

$R_1$ und $R_2$ unabhängig voneinander einen Alkylrest mit 1 bis 4 Kohlenstoffatomen,

$R_3$ und $R_4$ unabhängig voneinander einen der folgenden Reste: Alkoxy mit 1 bis 10 Kohlenstoffatomen, Monoalkylamino, wobei der Alkylrest 1 bis 10 Kohlenstoffatome aufweist, Monoarylamino, Halogen, Aryl-alkyl-amino, Dialkylamino, Alkylmercapto, Cyclohexyloxy, Alkylcyclohexylamino und Cyclohexylamino, M Wasserstoff oder ein Äquivalent eines Kations, und n die Zahlen 1 oder 2 bedeutet.

**Claims**

1. A monoazo compound of the formula I

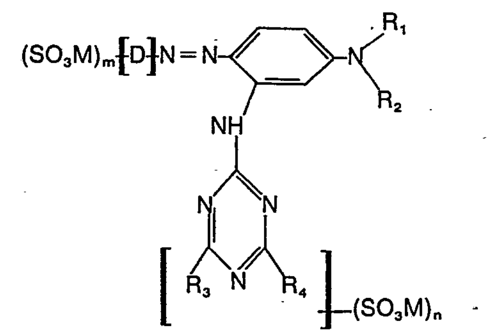

(I)

in which D is the radical of an aromatic or heterocyclic diazo component, each of $R_1$ and $R_2$ independently of the other is an alkyl radical having 1 to 4 carbon atoms, each of $R_3$ and $R_4$ independently of the other is one of the following radicals: alkoxy having 1 to 10 carbon atoms, substituted or unsubstituted monoalkylamino in which the alkyl radical has 1 to 10 carbon atoms, monoarylamino, halogen, N-aryl-N-alkylamino, di($C_1$–$C_4$)alkylamino, alkylmercapto, cyclohexyloxy, N-alkyl-N-cyclohexylamino and cyclohexylamino,

M is hydrogen or one equivalent of a cation,

m is 0 or 1 and

n is 0, 1 or 2, with the proviso that the sum of m and n is in the numerical range from 1 to 2.

2. A monoazo compound according to claim 1, wherein m is 1 and n is 0.

3. A monoazo compound according to claim 1, wherein m is 1 and n is 1.

4. A monoazo compound according to any one of claims 1 to 3, wherein D is a phenyl radical which, in addition to being substituted by the $(SO_3M)_m$ group, also contains further substituents.

5. A monoazo compound according to claim 4, wherein D is a phenyl radical which is substituted by one or more identical or different substituents selected from the group consisting of: halogen, $CF_3$, $SO_2$-alkyl, $SO_2$-aryl, $SO_2NH_2$, $SO_2N$(alkyl)-N-(cyclohexyl), $SO_2N$-$(alkyl)_2$ or $SO_2NHR$, in which R is $C_1$–$C_8$alkyl which is unsubstituted or substituted by phenyl, or is alkyl-O-$SO_3M$, aryl or cyclohexyl.

6. A monoazo compound according to any one of claims 1 to 5, wherein $R_1$ and $R_2$ are identical alkyl radicals.

7. A monoazo compound according to claim 6, wherein $R_1$ and $R_2$ are each $C_2H_5$.

8. A monoazo compound according to claim 1, wherein $R_3$ is halogen, monoalkylamino which has 1 to 10 carbon atoms in the alkyl radical and is unsubstituted or substituted by phenyl, or is N,N-dialkylamino, cyclohexylamino, N-alkyl-N-cyclohexylamino, arylamino or N-alkyl-N-arylamino and $R_4$ is alkoxy having 1 to 8 carbon atoms, cyclohexyloxy, monoalkylamino which is unsubstituted or substituted by phenyl, or is cyclohexylamino, arylamino or N,N-dialkylamino.

9. A monoazo compound according to any one of claims 2 and 4 to 8, wherein $R_3$ is halogen, in particular chlorine, and $R_4$ is alkoxy having 1 to 8 carbon atoms, in particular isopropoxy.

10. A monoazo compound according to any one of claims 3 to 8, wherein $R_3$ is arylamino, N-alkyl-N-arylamino, N,N-dialkylamino, N-alkyl-N-cyclohexylamino, cyclohexylamino or monoalkylamino having 1 to 10 carbon atoms and $R_4$ is arylamino, in particular phenylamino.

11. The monoazo compound, according to claim 1, of the formula

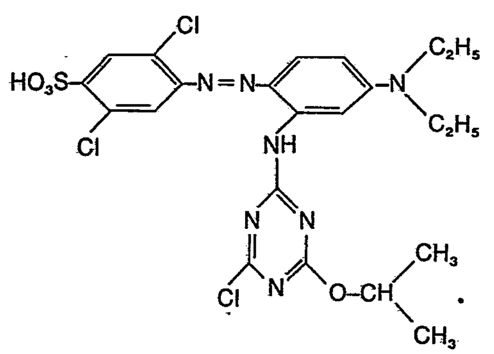

12. The monoazo compound, according to claim 1, of the formula

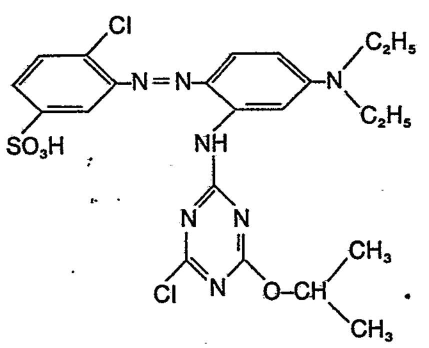

13. The monoazo compound, according to claim 1, of the formula

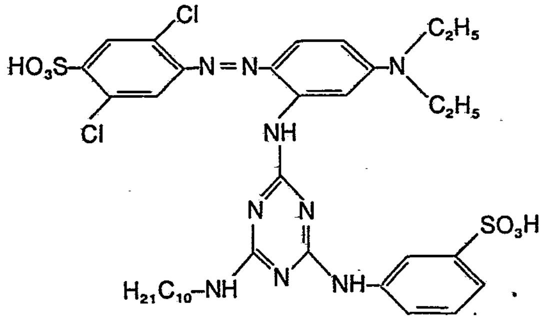

14. The monoazo compound, according to claim 1, of the formula

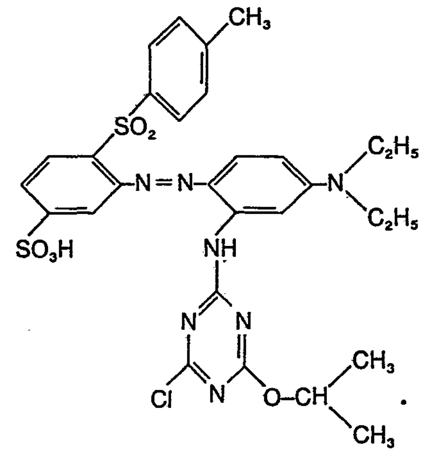

15. A process for the preparation of a monoazo compound of the formula I according to claim 1, which comprises diazotising an amine of the formula II

$$(SO_3M)_m\text{-}[D]\text{-}NH_2 \qquad II$$

and coupling the diazo compound with a coupling component of the formula III

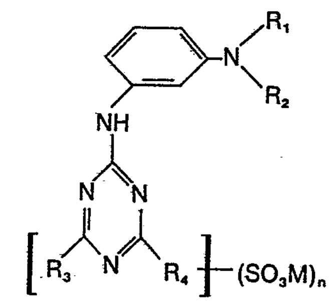

III

in which formulae the symbols D, M, m, $R_1$, $R_2$, $R_3$, $R_4$ and n are as defined for formula I.

16. A process according to claim 15, wherein an amine of the formula II is used in which m is 1 and a coupling component of the formula III is used in which n is 0.

17. A process according to claim 15, wherein an amine of the formula II is used in which m is 1 and a coupling component of the formula III is used in which n is 1.

18. A process according to any one of claims 15 to 17, wherein an amine of the formula II is used in which D is a phenyl radical which, in addition to being substituted by the $(SO_3M)_m$ group, also contains further substituents.

19. A process according to claim 18, wherein D is a phenyl radical which is substituted by one or more identical or different substituents selected from the group consisting of: halogen, $CF_3$, $SO_2$-alkyl, $SO_2$-aryl, $SO_2NH_2$, $SO_2N$-(alkyl)-N-(cyclohexyl), $SO_2N$-(alkyl)$_2$ or $SO_2NHR$, in which R is $C_1$–$C_8$alkyl which is unsubstituted or substituted by phenyl, or is alkyl-O-$SO_3M$, aryl or cyclohexyl.

20. A process according to any one of claims 15 to 19, wherein a coupling component of the formula III is used in which $R_1$ and $R_2$ are identical alkyl radicals.

21. A process according to claim 20, wherein a coupling component of the formula III is used in which $R_1$ and $R_2$ are each $C_2H_5$.

22. A process according to claim 15, wherein a coupling component of the formula III is used in which $R_3$ is halogen, monoalkylamino which has 1 to 10 carbon atoms in the alkyl radical and is unsubstituted or substituted by phenyl, or is dialkylamino, cyclohexylamino, N-alkyl-N-cyclohexylamino, arylamino or N-alkyl-N-arylamino and $R_4$ is alkoxy having 1 to 8 carbon atoms, cyclohexyloxy, monoalkylamino, which is unsubstituted or substituted by phenyl, or is cyclohexylamino, arylamino or dialkylamino.

23. A process according to any one of claims 16 and 18 to 22, wherein a coupling component of the formula III is used in which $R_3$ is halogen, in particular chlorine, and $R_4$ is alkoxy having 1 to 8 carbon atoms, in particular isopropoxy.

24. A process according to any one of claims 17 to 22, wherein a coupling component of the formula III is used in which $R_3$ is arylamino, N-alkyl-N-arylamino, dialkylamino, N-alkyl-N-cyclohexylamino, cyclohexylamino or monoalkylamino having 1 to 10 carbon atoms and $R_4$ is arylamino, in particular phenylamino.

25. The use of a monoazo compound according to claim 1 or of a monoazo compound obtained by the process according to claim 15, as a dye for dyeing and printing textile materials which can be dyed with acid dyes.

26. Use according to claim 25, for dyeing and printing wool or polyamide.

27. An amine of the formula III

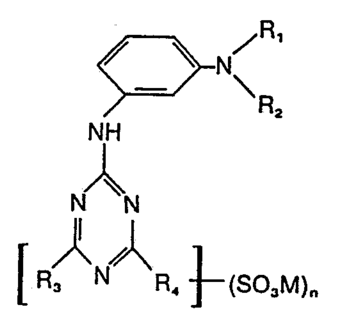

III

in which each of $R_1$ and $R_2$ independently of the other is an alkyl radical having 1 to 4 carbon atoms, each of $R_3$ and $R_4$ independently of the other is one of the following radicals: alkoxy having 1 to 10 carbon atoms, monoalkylamino in which the alkyl radical has 1 to 10 carbon atoms, monoarylamino, halogen, arylalkylamino, dialkylamino, alkylmercapto, cyclohexyloxy, alkylcyclohexylamino and cyclohexylamino, M is hydrogen or one equivalent of a cation and n is 1 or 2.

**Revendications**

1. Composés monoazoïques de formule I:

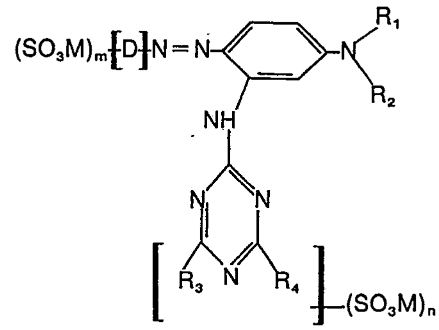

(I)

dans laquelle:

D est le reste d'un diazoïque aromatique ou hétérocyclique;

$R_1$ et $R_2$ indépendamment l'un de l'autre, sont des restes alkyle ayant 1 à 4 atomes de carbone,

$R_3$ et $R_4$ indépendamment l'un de l'autre, représentent un des restes suivants: alcoxy ayant 1 à 10 atomes de carbone, monoalkylamino éventuellement substitué où le reste alkyle présente 1 à 10 atomes de carbone, monoarylamino, halogéno, N-aryl-N-alkyl-amino, dialkylamino($C_1$–$C_4$), alkylmercapto, cyclohexyloxy, N-alkyl-N-cyclohexylamino et cyclohexylamino,

M est un atome d'hydrogène ou un équivalent d'un cation,

m est le nombre de 0 ou 1, et

n est le nombre de 0, 1 ou 2 à la condition que la somme de m et n soit dans la gamme de 1 à 2.

2. Composés monoazoïques selon la revendication 1, caractérisés par le fait que m est le nombre 1, et n est le nombre 0.

3. Composés monoazoïques selon la revendication 1, caractérisés par le fait que m est le nombre 1, et n est le nombre 1.

4. Composés monoazoïques selon les revendications 1 à 3, caractérisés par le fait que D représente un reste phényle qui en plus d'être substitué par le groupe $(SO_3M)_m$–, porte encore d'autres substituants.

5. Composés monoazoïques selon la revendication 4, caractérisés par le fait que D représente un reste phényle qui est substitué une ou plusieurs fois d'une façon identique ou différente par des groupes halogéno, $CF_3$, $SO_2 \cdot$ alkyle, $SO_2 \cdot$ aryle, $SO_2NH_2$, $SO_2N \cdot$ (alkyl)N $\cdot$ (cyclohexyl), $SO_2N$(alkyl)$_2$ ou $SO_2NH \cdot R$, où R désigne un reste alkyle en $C_1$–$C_8$, éventuellement substitué par un groupe phényle, un reste alkyl-O-$SO_3M$, aryle ou cyclohexyle.

6. Composés monoazoïques selon les revendications 1 à 5, caractérisés par le fait que $R_1$ et $R_2$ représentent les mêmes restes alkyle.

7. Composés monoazoïques selon la revendication 6, caractérisés par le fait que $R_1$ et $R_2$ désignent chacun $C_2H_5$.

8. Composés monoazoïques selon la revendication 1, caractérisés par le fait que $R_3$ est un halogène, un groupe monoalkylamino ayant 1 à 10 atomes de carbone dans le reste alkyle, éventuellement substitué par un groupe phényle, N · N-dialkylamino, cyclohexylamino, N-alkyl-N-cyclohexylamino, arylamino ou N-alkyl-N-aryl-amino, et $R_4$ est un groupe alcoxy ayant 1 à 8 atomes de

carbone, cyclohexyloxy, monoalkylamino, éventuellement substitué par un reste phényle, cyclohexylamino, arylamino ou N · N-dialkylamino.

9. Composés monoazoïques selon les revendications 2 et 4 à 8, caractérisés par le fait que $R_3$ est un halogène, en particulier le chlore, et $R_4$ est un groupe alcoxy ayant 1 à 8 atomes de carbone, en particulier le groupe isoproproxy.

10. Composés monoazoïques selon les revendications 3 à 8, caractérisés par le fait que $R_3$ est un groupe arylamino, N-alkyl-N-aryl-amino, N · N-dialkyl-amino, N-alkyl-N-cyclohexyl-amino, cyclohexylamino ou monoalkylamino ayant 1 à 10 atomes de carbone, et $R_4$ est un groupe arylamino ou surtout phénylamino.

11. Composé monoazoïque selon la revendication 1, ayant la formule:

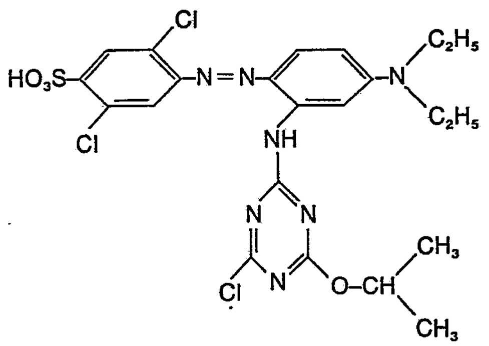

12. Composé monoazoïque selon la revendication 1, ayant la formule:

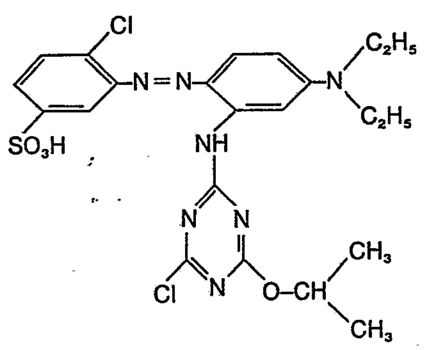

13. Composé monoazoïque selon la revendication 1, ayant la formule:

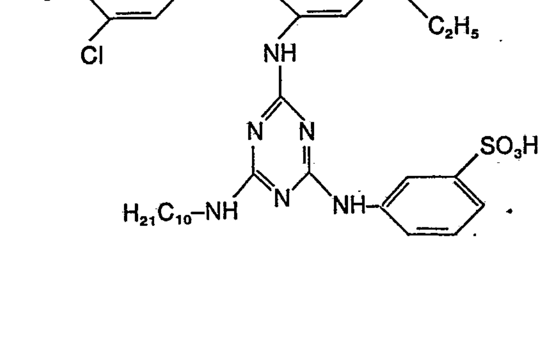

14. Composé monoazoïque selon la revendication 1, ayant la formule:

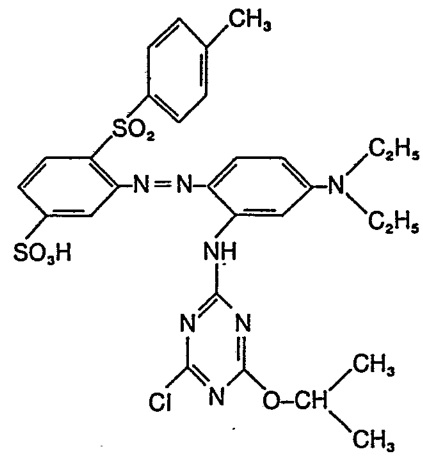

15. Procédé pour la préparation de composés monoazoïques de formule I selon la revendication 1, caractérisé par le fait qu'on diazote une amine de formule II:

$$(SO_3M)_m\text{-}[D]\text{-}NH_2 \qquad \text{II}$$

et qu'on copule avec un copulant de formule III:

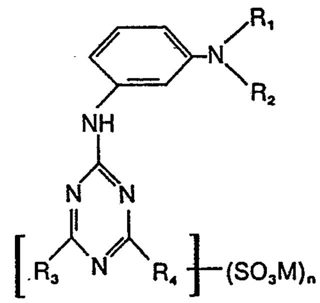

III

où les symboles D, M, m, $R_1$, $R_2$, $R_3$, $R_4$ et n ont les significations données sous la formule I.

16. Procédé selon la revendication 15, caractérisé par le fait qu'on utilise une amine de formule II dans laquelle m est le nombre 1 et qu'on utilise un copulant de formule III dans laquelle n est le nombre 0.

17. Procédé selon la revendication 15, caractérisé par le fait qu'on utilise une amine de formule II dans laquelle m est le nombre 1 et qu'on utilise un copulant de formule III dans laquelle n est le nombre 1.

18. Procédé selon les revendications 15 à 17, caractérisé par le fait qu'on utilise une amine de formule II dans laquelle D représente un reste phényle qui en plus d'être substitué par le groupe $(SO_3M)_m$ porte encore d'autres substituants.

19. Procédé selon la revendication 18, caractérisé par le fait que D représente un reste phényle qui est substitué une ou plusieurs fois d'une façon identique ou différente par un halogène, un groupe $CF_3$, $SO_2 \cdot$ alkyle, $SO_2 \cdot$ aryle, $SO_2NH_2$, $SO_2N \cdot$ (alkyl)N · (cyclohexyl), $SO_2N(alkyl)_2$ ou $SO_2NH \cdot R$, où R désigne un reste alkyle en $C_1$–$C_8$,

éventuellement substitué par un groupe phényle, alkyl-O-$SO_3M$, aryle ou cyclohexyle.

20. Procédé selon les revendications 15 à 19, caractérisé par le fait qu'on utilise un copulant de formule III dans laquelle $R_1$ et $R_2$ représentent les mêmes restes alkyle.

21. Procédé selon la revendication 20, caractérisé par le fait qu'on utilise un copulant de formule III, dans laquelle $R_1$ et $R_2$ représentent chacun $C_2H_5$.

22. Procédé selon la revendication 15, caractérisé par le fait qu'on utilise un copulant de formule III dans laquelle $R_3$ est un halogène, un groupe monoalkylamino ayant 1 à 10 atomes de carbone dans le reste alkyle, éventuellement substitué par un radical phényle, un groupe dialkylamino, cyclohexylamino, N-alkyl-N-cyclohexylamino, arylamino ou N-alkyl-N-arylamino, et $R_4$ est un groupe alcoxy ayant 1 à 8 atomes de carbone, cyclohexyloxy, monoalkylamino, éventuellement substitué par un radical phényle, un groupe cyclohexylamino ou arylamino ou dialkylamino.

23. Procédé selon les revendications 16 et 18, à 22, caractérisé par le fait qu'on utilise un copulant de formule III dans laquelle $R_3$ est un halogène, en particulier le chlore, et $R_4$ est un groupe alcoxy ayant 1 à 8 atomes de carbone, en particulier le groupe isopropoxy.

24. Procédé selon les revendications 17 à 22, caractérisé par le fait qu'on utilise un copulant de formule III dans laquelle $R_3$ est un groupe arylamino, N-alkyl-N-aryl-amino, dialkylamino, N-alkyl-N-cyclohexyl-amino, cyclohexylamino ou monoalkylamino ayant 1 à 10 atomes de carbone, et $R_4$ est un groupe arylamino, surtout le groupe phénylamino.

25. Utilisation des composés monoazoïques selon la revendication 1, ou des composés monoazoïques obtenus selon le procédé décrit dans la revendication 15, comme colorants pour teindre et imprimer des matières textiles qui peuvent être teintes avec des colorants acides.

26. Utilisation selon la revendication 25 pour la teinture et l'impression de la laine ou des polyamides.

27. Amine de formule III:

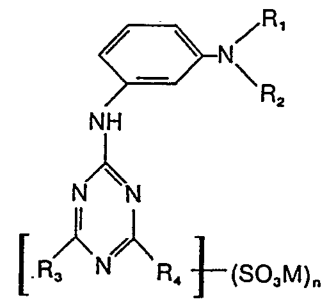

III

dans laquelle:

$R_1$ et $R_2$ indépendamment l'un de l'autre, sont des restes alkyle ayant 1 à 4 atomes de carbone,

$R_3$ et $R_4$ indépendamment l'une de l'autre, sont un des restes suivants: alcoxy ayant 1 à 10 atomes de carbone, monoalkylamino où le reste alkyle présente 1 à 10 atomes de carbone, monoarylamino, halogéno, arylalkylamino, dialkylamino, alkylmercapto, cyclohexyloxy, alkylcyclohexylamino et cyclohexylamino, M est un atome d'hydrogène ou un équivalent d'un cation, et n est le nombre 1 ou 2.